**Europäisches Patentamt**

**European Patent Office**

**Office européen des brevets**

(19)

(11) **EP 0 954 178 B1**

(12) **EUROPEAN PATENT SPECIFICATION**

(45) Date of publication and mention
of the grant of the patent:
**08.10.2003 Bulletin 2003/41**

(51) Int Cl.⁷: **H04N 7/173**, H04N 7/20

(21) Application number: **99108383.3**

(22) Date of filing: **29.04.1999**

(54) **Method for distributing video information to mobile object by digital radio communication**

Methode zur Verteilung von Videoinformationen an einem mobilen Objekt durch digitale Funkübertragung

Méthode de distribution d'information vidéo vers un object mobile via radiocommunication numérique

(84) Designated Contracting States:
**DE FR GB IT**

(30) Priority: **30.04.1998 JP 12118998**
**30.04.1998 JP 12119098**
**30.04.1998 JP 12119198**

(43) Date of publication of application:
**03.11.1999 Bulletin 1999/44**

(73) Proprietor: **Matsushita Electric Industrial Co., Ltd.**
**Kadoma-shi, Osaka 571-8501 (JP)**

(72) Inventors:
• **Nohara, Akira**
**Nishinomiya-shi, Hyogoken 662-0053 (JP)**

• **Nomura, Noboru**
**Kyoto-shi, Kyotofu 612-0889 (JP)**
• **Suzuki, Akihiro**
**Neyagawa-shi, Osakafu 572-0078 (JP)**

(74) Representative: **Eisenführ, Speiser & Partner**
**Martinistrasse 24**
**28195 Bremen (DE)**

(56) References cited:
**WO-A-94/14273** **DE-A- 4 424 380**
**US-A- 5 121 391** **US-A- 5 243 652**

**Description**

FIELD OF THE INVENTION

The present invention relates to a method for distributing video information to a mobile object by digital radio communication, a central station unit used for the video information distribution method, and a mobile terminal unit used for the video information distribution method and, more particularly, to those capable of performing appropriate accounting on the distributed video information in accordance with the receiving environment of the mobile terminal unit.

Further, the present invention relates to a method for distributing video information to a mobile object by digital radio communication, a central station unit used for the video information distribution method, and a mobile terminal unit used for the video information distribution method and, more particularly, to those capable of ensuring transmission quality relating to code errors of the distributed video information.

Moreover, the present invention relates to a digital video signal transmission/receiving method for transmitting/ receiving a digital video signal in which a digital image signal and a digital audio signal are multiplexed and modulated, in a digital transmission field, and a digital video signal transmission/receiving apparatus which transmits/receives the digital video signal.

BACKGROUND OF THE INVENTION

In CATV broadcasting, according to a request for video information from an arbitrary one of plural terminals to a central station, the central station distributes the video information to the terminal which has made the request.

Meanwhile, for example, Japanese Published Patent Application No. Hei. 8-32530 discloses a data broadcasting system which can perform flexible accounting as follows. That is, in a service operating company, different kinds of data are encrypted using different keys to be transmitted. In a data receiving unit, received data are recorded in an optical magnetic disk and, when the recorded data are decoded, accounting control is performed according to the kind of each data identified from the key used for the decoding and the amount of the data.

Further, for example, Japanese Published Patent Application No. Hei. 7-7728 discloses a pay per view (PPV) broadcasting system for satellite TV broadcasting, in which scrambled programs are descrambled to be viewed by the user, according to the charge paid by the user.

Furthermore, for example, Japanese Published Patent Application No. Hei. 7-283798 discloses a satellite broadcasting mobile receiving unit which realizes switching between a moving picture and a still picture without displaying a scrambled image when receiving scrambled satellite broadcasting by a mobile object.

When constructing a fee-charging video information distribution system which distributes video information requested by an arbitrary one of plural mobile terminals comprising terminals mounted on a mobile object, from the central station to the mobile terminal which has made the request, it is necessary to ensure the quality of the video information to be distributed before accounting on the video information distributed.

However, the receiving environment of the terminal varies because it is mounted on the mobile object and, therefore, it is difficult for the central station to perform accounting based on confirmation as to whether the quality of the distributed video information has been ensured or not, for each mobile terminal.

This problem cannot be solved by the above-described prior arts, i.e., the video information distribution method according to CATV broadcasting, the data broadcasting system (Japanese Published Patent Application No.Hei. 8-32530) and the PPV broadcasting system (Japanese Published Patent Application No.Hei.7-7728), because, in these method and systems, a mobile object is not a target to which video information is distributed.

Further, since the satellite broadcasting mobile receiving apparatus (Japanese Published Patent Application No. Hei. 7-283798) is directed to realizing switching between a moving picture and a still picture without displaying a scrambled image, it cannot solve the above-mentioned problem.

By the way, recently, in fields of communication or broadcasting equipment, a digital transmission technique for multiplexing image signals or audio signals into a serial signal and transmitting a multiplexed signal, has been developed. An example of this digital transmission technique, SMPTE (Society of Motion Picture and Television Engineers) for examining and determining standards for movie, TV broadcasting, and the like in the United States, has proposed a method in which auxiliary data including an audio signal or a control signal is packetized and multiplexed into a sink chip of an image signal, and then subjected to parallel-serial conversion, when transmitting a video signal. Such a method, without the description of sources, is also disclosed in JP No. Hei. 5-219488.

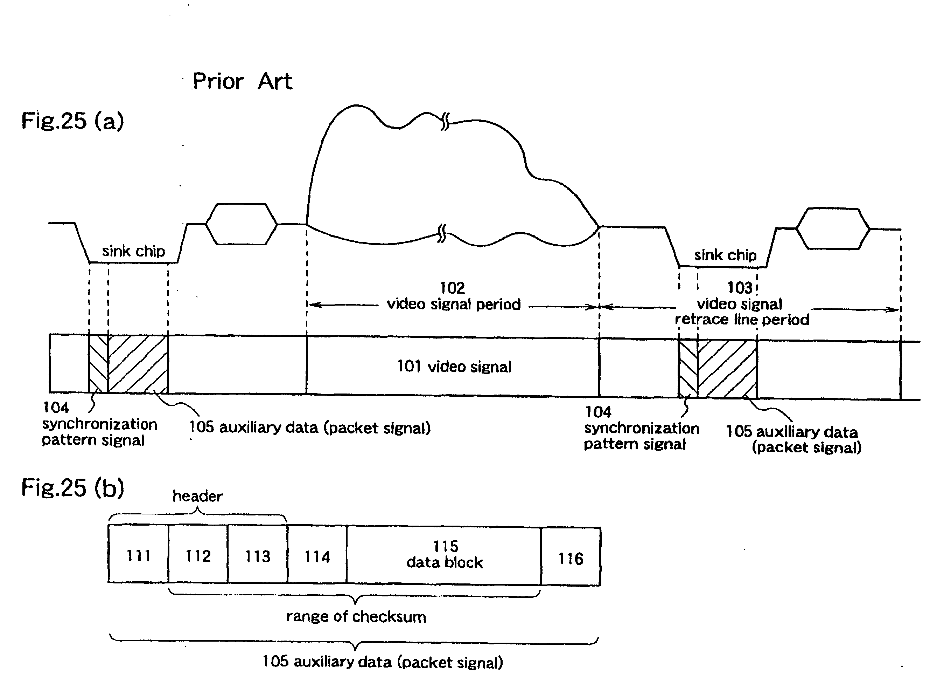

Figure 25(a) shows a transmission format of the video signal transmitted according to the above method. In figure 25(a), reference numeral 101 denotes a video signal comprising a video signal period 102 and a video signal retrace line period 103. During the video signal period 102, the video signal is transmitted, and during the video signal retrace line period 103, the audio signal and the like is transmitted. Reference numeral 104 denotes a synchronization pattern signal which is multiplexed into a sink chip of the video signal retrace line period 103 together with auxiliary

## EP 0 954 178 B1

data 105 including an audio signal or a control signal.

Figure 25(b) shows a packet structure of the auxiliary data shown in figure 25(a). In the figure, reference numeral 111 denotes a flag indicating that this is a packet. 112 denotes a data identifier (ID) indicating a type of data. 113 denotes a serial number among packets of the same ID 112. 114 denotes the number of data indicating the number of data included in a data block 115 corresponding to a data body including speech data. 116 denotes a checksum which finds a checksum of the flag 111, the data ID 112, the serial number 113, and the data block 115. In summary, the packet of the auxiliary data is composed of a header comprising blocks of respective control signals, i.e., the flag 111, the data ID 112, and the serial number 113, the number of data 114, the data block 115 including the audio signal, and the checksum 116 for performing checksum.

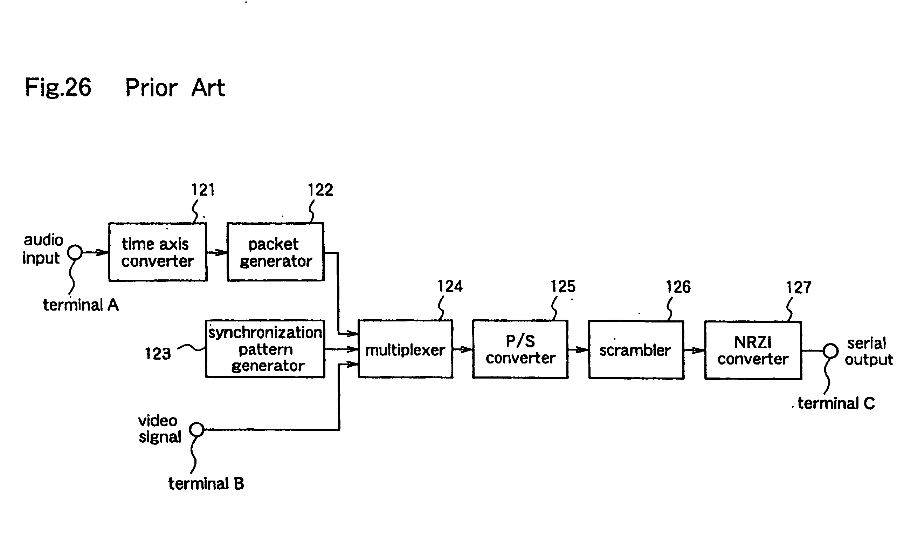

Figure 26 is a block diagram showing a conventional video signal transmission apparatus. Here assume that the data body of the auxiliary data is audio data.

In the figure, reference numeral 121 denotes a time axis converter which periodically receives the audio signal via a terminal A, converts a time axis of the audio signal by converting a clock cycle of the audio signal to insert the audio signal into the sink chip (see figure 25(a)) of the video signal retrace line period 103, and outputs the resulting audio signal. Specifically, the time axis converter 121 is adapted to read out the audio signal stored in a memory field by field or frame by frame of the video signal at a sampling rate of the video signal only during a sink chip period. That is, during the other period, the audio signal is not read. 122 denotes a packet generator which receives the audio signal from the time-axis converter 121, and adds the flag 111, the data ID 112, the serial number 113, the number of data 114, and the checksum 116 to the data block, to generate a packet signal shown in figure 25(b). 123 denotes a . synchronization pattern generator which combines several words of data patterns which the video signal or the packet signal does not have to generate a synchronization pattern. 124 denotes a multiplexer which multiplexes the video signal from a terminal B, the packet signal from the packet generator 122, and the synchronization pattern from the synchronization pattern generator 123 on the time axis. 125 denotes a P/S converter which converts parallel signals of multiplexed data into a serial signal. 126 denotes a scrambler (circuit) of a self-synchronization type which rearranges the serial signal from the P/S converter 125 and encrypts the same. 127 denotes an NRZI (non-return-to zero-inverted) converter (circuit) which inverts a level of the serial signal from the scrambler 126 from "H" (high) to "L" (low) when it is at H level, and holds the level of the serial signal when it is at L level. Therefore, use of the scrambler 60 and the NRZI converter 70 removes DC (direct current) component contained in the video signal or the packet signal.

Subsequently, operation of the conventional video signal transmission apparatus so constructed.

The time axis converter 121 periodically receives the audio signal as an input via the terminal A and performs time axis conversion for the audio signal and outputs intermittent data of the audio signal read only during the sink chip period.

Receiving the intermittent data from the time axis converter 121, the packet generator 122 adds the flag 111, the data ID 112, the serial number 113, the number of data 114, and the checksum 116 to the data block to generate the packet signal shown in figure 25(b), and outputs the packet signal.

The synchronization pattern generator 123 combines several words of data patterns which the video signal or the packet signal does not have, to generate the synchronization pattern, and outputs the same.

The multiplexer 124 multiplexes the video signal from the terminal B, the packet signal from the packet generator 122, and the synchronization pattern from the synchronization pattern generator 123 on the time axis, and outputs the resulting signal.

The P/S converter 125 converts the parallel signals of multiplexed data into the serial signal and outputs the serial signal.

The scrambler 126 rearranges the serial signal from the P/S converter 125 and encrypts the same.

The NRZI (non-return-to-zero-inverted) converter 127 inverts the level of the serial signal from the scrambler from "H" (high) to "L" (low) when it is at H level, and holds the level of the serial signal when it is at L level. The converter 127 outputs the serial signal from which the DC component has been removed, through a terminal C, which is transmitted.

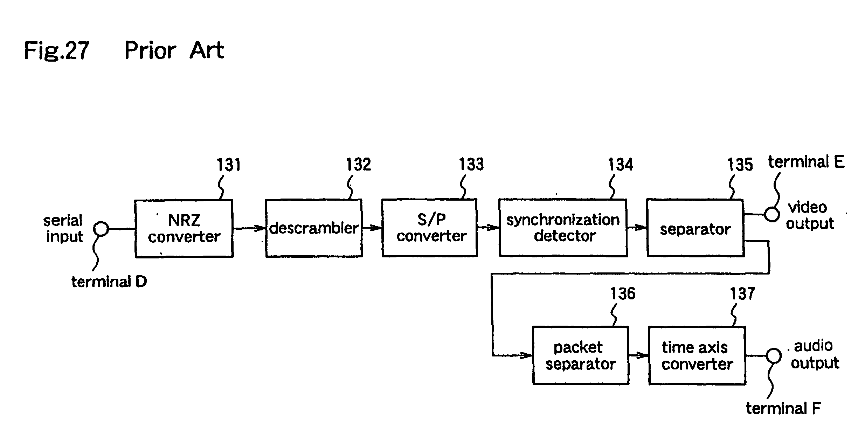

Figure 27 is a block diagram showing a conventional video signal receiving apparatus.

In the figure, reference numeral 131 denotes an NRZ (non-return-to-zero) converter (circuit) which receives the serial signal via a terminal D and performs signal processing corresponding to inverse conversion of signal processing of the NRZI converter 127 (see figure 25). 132 denotes a descrambler which performs signal processing corresponding to inverse conversion of signal processing of the scrambler 126 (figure 25). 133 denotes an S/P (serial-to-parallel) converter (circuit) which converts a multiplexed serial signal from the descrambler 132 into parallel signals. 134 denotes a synchronization detector which detects a synchronization pattern from the parallel signals output from the S/P converter 133 and rearranges the parallel signals into correct words. 135 denotes a separator which separates a signal of the correct words from the synchronization detector 134 into the video signal and the packet signal. 136 denotes a packet separator which checks a structure of the packet signal from the separator 135 and then takes out the data block including the audio signal from the packet signal. 137 denotes a time axis converter which performs

3

time axis conversion for intermittent audio data from the packet separator 136 into a clock of the audio signal, to reproduce the audio signal.

Subsequently, a description will be given of operation of the conventional video signal receiving apparatus so constructed.

The NRZ (non-return-to-zero) converter 131 receives the serial signal via the terminal D and performs signal processing corresponding to inverse conversion of signal processing of the NRZI converter 127.

The descrambler 132 rearranges the serial signal from the NRZ converter 131 for restoration and outputs a descrambled signal.

The S/P converter 133 converts the multiplexed serial signal from the descrambler 132 into the parallel signals.

The synchronization detector 134 detects the synchronization pattern from the parallel signals from the S/P converter 133 and rearranges the parallel signals into the correct words.

The separator 135 separates the signal of the correct words into the video signal and the packet signal by generating a timing pulse for separation using a position where the synchronization pattern is multiplexed as a reference, and outputs the video signal via a terminal E and the packet signal to the packet separator 136.

The packet separator 136 checks the structure of the packet signal from the separator 135 and then takes out the data block including the audio signal from the packet signal.

The time axis converter 137 performs time axis conversion for the intermittent audio data from the packet separator 136 into the clock of the audio signal, to reproduce the audio signal, and outputs the reproduced signal via a terminal F.

Use of the above video signal transmission apparatus and video signal receiving apparatus enables to multiplex the video signal and the audio signal to make serial transmission and take out the video signal and the audio signal from the multiplexed signal.

In the construction described above (see figure 26), no problems arise when no transmission errors occur. However, when long-distance transmission is made or there is external interference such as multi-pass interference which is experienced by a mobile object performing a receiving process, and thereby the transmission errors tend to occur, not only the video signal but the audio signal is degraded. In addition, if the transmission errors increase, the video signal or the audio signal cannot be received.

In mobile object receiving in ground wave digital broadcasting, when an image signal is degraded, a moving picture is changed into a still picture, and when an audio signal is significantly degraded, it is muted in order to lower noise. In case of an image, use of the still picture gets rid of disorder of the image to make it visually preferable to the user, but in case of a voice, the voice itself goes out, although noise is lowered. In particular, since the multi-pass interference frequently occurs in the mobile object, voiceless state and voiced state are repeated, which makes it extremely difficult for the user to hear the voice.

## SUMMARY OF THE INVENTION

It is still another object of the present invention to provide a digital video signal transmission/receiving mechod and a digital video signal transmission/receiving apparatus, in which a digital audio signal can be reproduced if mobile object receiving is performed in worse condition, in a system where a digital image signal and the digital audio signal are multiplexed and modulated.

Other objects and advantages of the invention will become apparent from the detailed description that follows.

These objects are achieved according to the present invention by a digital video signal transmission apparatus for transmitting a digital video signal in which a digital image signal and a digital audio signal corresponding to the digital image signal which are externally input are multiplexed, said apparatus comprising: modulation means which modulates the digital audio signal by first modulation to provide a fixed receiving digital audio signal and modulates the digital audio signal by second modulation which provides higher resistibility to a transmission error than the first modulation, to provide a mobile object receiving digital audio signal; and a transmitter which transmits a digital video signal in which the digital image signal, the fixed receiving digital audio signal, and the mobile object receiving digital audio signal are multiplexed.

These objects are achieved according to the present invention also by a digital video signal receiving method which receives a digital video signal in which a digital image signal and a digital audio signal corresponding to the digital image signal are multiplexed as an input, and reproduces the digital image signal and the digital audio signal from the received digital video signal, wherein the digital video signal comprises a fixed receiving digital audio signal obtained by modulating the digital audio signal according to first modulation and a mobile object receiving digital audio signal obtained by modulating the digital audio signal according to second modulation which provides higher resistibitity to a transmission error than the first modulation and the digital image signal, the fixed receiving digital audio signal, the mobile object receiving digital audio signal and the digital image signal are multiplexed, said method comprising: a demodulation step for receiving and demodulating the digital image signal, the fixed receiving digital audio signal,

and the mobile object receiving digital audio signal; a receiving status detecting step for detecting a signal level of the received digital video signal and outputting a control signal when the detected value is lower than a preset vale; and a audio switching control step for receiving the fixed receiving digital audio signal from a fixed receiving audio output as an input and outputting the fixed receiving digital audio signal, and when the signal level of the received digital video signal is lower than the preset value, performing switching to a mobile object receiving audio output to receive the mobile object receiving digital audio signal as an input and outputting the mobile object receiving digital audio signal.

These objects are finally also achieved by a digital video signal receiving apparatus which receives a digital video signal in which a digital image signal and a digital audio signal corresponding to the digital image signal are multiplexed as an input, and reproduces the digital image signal and the digital audio signal from the received digital video signal, wherein the digital video signal comprises a fixed receiving digital audio signal obtained by modulating the digital audio signal according to first modulation and a mobile object receiving digital audio signal obtained by modulating the digital audio signal according to second modulation which provides higher resistibility to a transmission error than the first modulation and the digital image signal, the fixed receiving digital audio signal, the mobile object receiving digital audio signal and the digital image signal are multiplexed, said apparatus comprising: a tuner which receives the digital video signal; orthogonal frequency division multiplexing demodulation means which demodulates the digital image signal, the fixed receiving digital audio signal, and the mobile object receiving digital audio signal; modulation division means which subjects demodulated signals from the orthogonal frequency division multiplexing demodulation means to modulation division, demapping in ways adapted to respective modulation methods, and then modulation composition; transport stream separating means which reproduces a transport stream from modulation-composited signals from the modulation division means, corrects errors for each of packets composing the transport stream, separates the packets into the digital image signal, the fixed receiving digital audio signal and the mobile object receiving digital audio signal and outputs the digital image signal, the fixed audio receiving digital audio signal, and the mobile object receiving digital audio signal, from a video output, a fixed receiving audio output, and a mobile object receiving audio output, respectively; a receiving status detection means which detects a signal level of the received digital video signal and outputs a control signal when the detected value is lower than a preset vale; an audio switching control means which receives the fixed receiving digital audio signal from the fixed receiving audio output as an input and outputs the fixed receiving digital audio signal and when receiving the control signal from the receiving status detection means, performs switching to the mobile object receiving audio output to receive the mobile object receiving digital audio signal as an input and outputs the mobile object receiving digital audio signal; a decoder which receives and decodes the digital image signal from the transport stream separating means, and either the fixed receiving digital audio signal or the mobile object receiving digital audio signal output from the audio switching control means; a display which displays a decoded image; and a speaker system which plays back decoded audio.

Preferred embodiments are characterized by the features of the dependent claims.

BRIEF DESCRIPTION OF THE DRAWINGS

Figure 1 is a block diagram showing a central station unit and a mobile terminal unit for use by a method for distributing video information to a mobile object (video information distribution method) by digital radio communication according to a first example.

Figure 2 is a diagram showing a data format of a digital communication signal for use by the video information distribution method shown in figure 1.

Figures 3(a) and 3(b) are diagrams showing another data format of the digital communication signal for use by the video information distribution method shown in figure 1.

Figures 4(a) and 4(b) are diagrams showing images in which video information is map information.

Figure 5 is a diagram showing hierarchy information which specifies ranks in a hierarchy of video information.

Figure 6 is a block diagram showing accounting information control means and accounting status storage means included in the central station unit shown in figure 1.

Figures 7(a)-7(c) are diagrams showing a file of accounting status stored in accounting status storage means shown in figure 5.

Figure 8 is a flowchart showing an accounting process.

Figure 9 is a block diagram showing a central station unit and a mobile terminal unit for use by a method for distributing video information to a mobile object by digital radio communication according to modification of the first example.

Figure 10 is a block diagram showing a central station unit and a mobile terminal unit for use by a method for distributing video information to a mobile object by digital radio communication according to a second example.

Figure 11 is a diagram showing a transmission quality management table used for ensuring transmission quality relating to a code error in transmission of video information by a central station side communication control means included in the central station unit shown in figure 10.

Figure 12 is a block diagram showing a structure of a part of the central station side communication control means shown in figure 10, for adding an error-correcting code to video information.

Figures 13(a)-13(c) are diagrams showing data processing operation of a data division unit and an error correction generation unit shown in figure 12, wherein figure 13(a) shows a state in which one video information is divided, figure 13(b) shows a state in which divided data attribute information is added to one divided data, and figure 13(c) shows a state in which an error-correcting code is added to the divided data to which the divided data attribute information has been added.

Figure 14 is a block diagram showing a central station unit and a mobile terminal unit for use by a method for distributing video information to a mobile object by digital radio communication according to a third example.

Figure 15 is a diagram showing a transmission quality management table used for ensuring transmission quality relating to a code error in transmission of video information by a central station side communication control means included in the central station unit shown in figure 14.

Figure 16 is a block diagram showing a central station unit and a mobile terminal unit for use by a method for distributing video information to a mobile object by digital radio communication according to a fourth example.

Figure 17 is a diagram showing a transmission quality management table used for ensuring transmission quality relating to a code error in transmission of video information by a central station side communication control means included in the central station unit shown in figure 16.

Figure 18 is a diagram showing a structure of a transmission TS (transport stream) transmitted from a digital video signal transmission apparatus according to a first embodiment of the present invention.

Figure 19 is a block diagram showing a digital video signal transmission apparatus of the first embodiment.

Figure 20 is a block diagram showing a detailed structure of an OFDM (orthogonal frequency division multiplexing) modulator shown in figure 19.

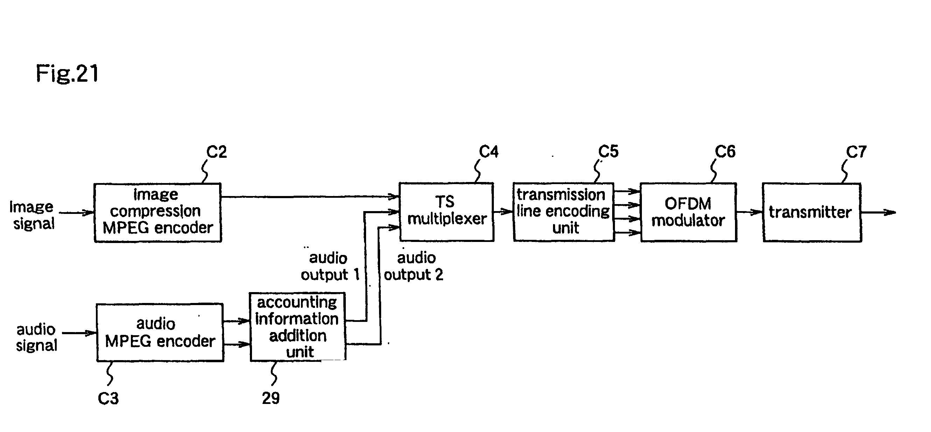

Figure 21 is a block diagram showing another structure of the digital video signal transmission apparatus of the first embodiment.

Figure 22 is a block diagram showing a digital video signal receiving apparatus according to a second embodiment of the present invention.

Figure 23 is a diagram showing a receiving TS received by the digital video signal receiving apparatus shown in figure 22.

Figure 24 is a block diagram showing another structure of the digital video signal receiving apparatus of the second embodiment.

Figures 25(a) and 25(b) are diagrams showing a conventional video signal transmission format.

Figure 26 is a block diagram showing a conventional video signal transmission apparatus.

Figure 27 is a block diagram showing a conventional video signal receiving apparatus.

DETAILED DESCRIPTION OF THE PREFERRED EMBODIMENTS AND EXAMPLES

Hereinafter, embodiments of the present invention will be described with reference to the drawings.

A preferred embodiment of the subject matter of claims 1 - 5 is illustrated by embodiment 1. A preferred embodiment of the subject matter of claims 6 - 11 is illustrated in particular by the following embodiment 2. The description of the examples 1 - 4 are for illustration purposes, mainly helping to understand the invention.

Example 1.

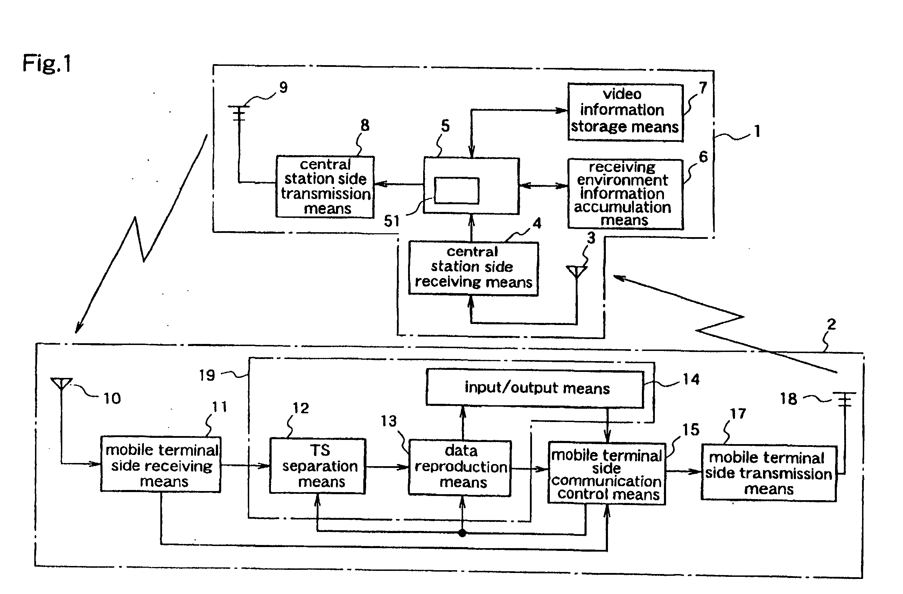

Figure 1 is a block diagram illustrating structures of a central station unit and a mobile terminal unit which are used in a method for distributing video information to a mobile object by digital radio communication according to a first example.

In figure 1, reference numeral 1 designates a central station unit placed on the ground (hereinafter referred to simply as a central station), and numeral 2 designates a mobile terminal unit mounted on a mobile object (hereinafter referred to simply as a mobile terminal). The central station 1, at least one mobile terminal 2, and at least one fixed station (not shown) placed on the ground constitute a system for executing the video information distribution method according to this first example. Further, as examples of mobile objects, there are a motorcar, a train, a ship, an airplane, etc. In this first example, a motorcar is taken as an example.

The above-mentioned video information is composed of data including at least image information. Video data, data files, and the like are included in the video information. The video data is composed of image information and audio information, and the video data includes video data comprising still pictures used for distribution of teletext or live view and video data comprising moving pictures used for distribution of video programs. Further, the data files include map data, Web data, home page, male, and the like. This first example will be described taking, as an example, video information comprising road map data (hereinafter referred to simply as a road map), residence map data (hereinafter referred to simply as a residence map), and a still picture such as a video of an intersection which is a live view. The road map and the residence map may be either video image data or digital data which represents a sentence relating to the map, such as link information.

Further, as for a communication line from the mobile terminal 2 to the central station 1, any radio communication line may be used as long as it is capable of data communication. In this first example, a portable telephone line is employed.

On the other hand, as for a method of distributing video information from the central station 1 to the mobile terminal 2, any method may be employed as long as it employs radio communication capable of digital data communication. In this first example, a distribution method according to an ordinary TV broadcasting system which radiates a radio wave to space for distribution of video information to the terminal, is employed. Accordingly, a transmission antenna 9 of the central station 1 is placed in a high ground, such as the top of a mountain or the rooftop of a tall building. Hence, the receiving environment of the mobile terminal varies due to multi-pass phasing or ghost which occurs depending on the area where the motorcar equipped with the mobile terminal runs. Or, the mobile terminal cannot receive the radio wave when the motorcar is in a tunnel.

The central station 1 comprises a receiving antenna 3, a central station side receiving means 4, an accounting status accumulation means 6, a video information storage means 7, a transmission antenna 9, a central station side transmission means 8, and a central station side communication control means 5.

The receiving antenna 3 receives a communication signal transmitted from the mobile terminal 2 through the portable telephone line. The central station side receiving means 4 demodulates and decodes the communication signal received by the antenna 3 and takes a request, read right information, and accounting information from the communication signal. The accounting status accumulation means 6 accumulates the accounting status of the distributed video information. The video information storage means 7 stores plural pieces of video information to be distributed to the mobile terminal 2. The central station side transmission means 8 encodes and compresses the received video information, packetizes (multiplexes) the coded and compressed information to obtain a digital communication signal, modulates a carrier with the digital communication signal to superpose the digital communication signal on the carrier to obtain a transmission signal, and transmits the transmission signal on a TV wave from the transmission antenna 9 to the mobile terminal 2. The central station side communication control means 5 takes video information corresponding to the request received by the central station side receiving means 4, from the video information storage means 7, to output the video information. Further, the communication control means 5 performs data processing and communication control.

In the central station side transmission means 8, the video information is encoded, compressed, and packetized according to, for example, a coding method based on MPEG2. The central station side transmission means 8 performs modulation according to, for example, 64 QAM (quadrature amplitude shift keying) modulation method.

Further, the central station side communication control means 5 adds a decryption key to the video information obtained from the video information storage means 7, which key enables the mobile terminal to read the video information. Further, the communication control means 5 applies a guard to the video information by using software, before transmitting the video information to the central station side transmission means 8. Furthermore, the communication control means 5 performs accounting on the distributed video signal. This accounting is performed by an accounting control means 51 included in the central station side communication control means 5, and the accounting status accumulation means 6.

The central station side communication control means 5 is implemented by, for-example, a CPU (central processing unit) of a computer, the accounting status accumulation means 6 is implemented by a main memory of the computer, and the video information storage means 7 is implemented by an information recording medium such as a hard disk and an information recording medium driving means such as a hard disk drive.

On the other hand, the mobile terminal 2 comprises a receiving antenna 10, a mobile terminal side receiving means 11, a TS separation means 12, a data reproduction means 13, an input/output means 14, a transmission antenna 18, a mobile terminal side transmission means 17, and a mobile terminal side communication control means 15.

The receiving antenna 10 receives a transmission signal transmitted on a TV wave from the central station 1. The mobile terminal side receiving means 11 demodulates the transmission signal received by the receiving antenna 10 to obtain a digital communication signal, detects receiving result information (described later) such as a receiving error ratio, from the digital communication signal, and takes the decryption key from the digital communication signal. The TS separation means 12 separates the digital communication signal obtained in the mobile terminal side receiving means 11, and takes the coded and compressed video information from the digital communication signal. The data reproduction means 13 decodes and decompresses the coded and compressed video information obtained in the TS separation means 13 to reproduce the original video information. The input/output means 14 has an image display means, an audio output means, and an input means to which a request is input (these means are not shown in the figure). The input/output means 14 displays the image information included in the video information reproduced by the data reproduction means 13, as an image, on a screen of the image display means, and outputs the audio information as a audio from the audio output means. The mobile terminal side transmission means 17 encodes and modulates the received information to obtain a communication signal, and transmits the communication signal to the central station 1 through the transmission antenna 18 and the portable telephone line. The mobile terminal side communication control means 15 transmits the receiver attribute information, the read right information, and the receiving result information, as accounting information, to the mobile terminal side transmission means 17, together with the request input through the input/output means 14. Further, the communication control means 15 allows the TS separation means 12 to separate the requested video information in accordance with the decryption key output from the mobile terminal side receiving means 11, and allows the data reproduction means 13 to remove the guard from the video information so that the video information can be reproduced. The TS separation means 12, the data reproduction means 13, and the input/output means 14 constructs the reproduction means 19.

In the input/output means 14, for example, the image display means is a liquid crystal display, the input means is a structure capable of inputting character information or user's instruction by using an input pen through an input image displayed on the liquid crystal display, and the audio output means is a speaker.

Further, the mobile terminal side communication control means 15 is implemented by a CPU of a microcomputer and contains an internal memory (not shown) which is implemented by a main memory of the microcomputer. The internal memory constitutes a storage means for temporarily storing the receiving error ratio detected by the mobile terminal side receiving means 11.

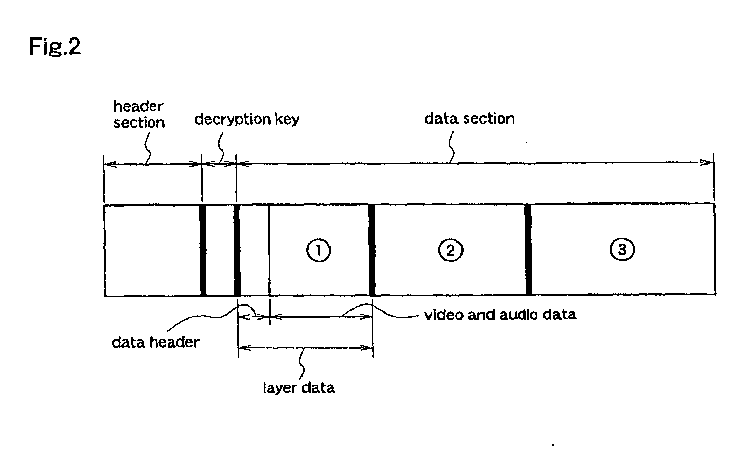

Figure 2 shows a data format of a digital communication signal which is encoded, compressed, and packetized by the central station side transmission means 8. As shown in figure 2, the data format of the digital communication signal is composed of a header section at the beginning, a decryption key which follows the header section, and a data section which follows the decryption key. The data section has a hierarchical structure in which data are hierarchized into multiple (triple in this example) layer data.

The data section is composed of an arbitrary number of layer data. In this first example, as shown in figure 2, it is composed of three pieces of layer data. One layer data corresponds to one file of video information, and each layer data is composed of a data header placed at the beginning (including class definition section), and data such as video and audio which follows the data header. Further, each layer data is subjected to a guard by software. The data header is composed of data for specifying the position of the video and audio data, a parameter for decompressing the video and audio data, a rank ID specifying the hierarchical rank of the video and audio data, etc.

The header section is composed of an authentication ID for collation with the mobile terminal, file numbers, data for specifying the file positions, the kinds of layer data in the data section, the hierarchical ranks of the layer data, control data, etc. However, it is not always necessary for the header section to have all of these data. The header section may be appropriately composed according to the use or the like. As an authentication ID, for example, an ID or a password of the user of the mobile terminal is employed.

The decryption key is composed of information indicating how many layer data are to be taken starting from the first layer data, and information for removing the guard of the layer data by software.

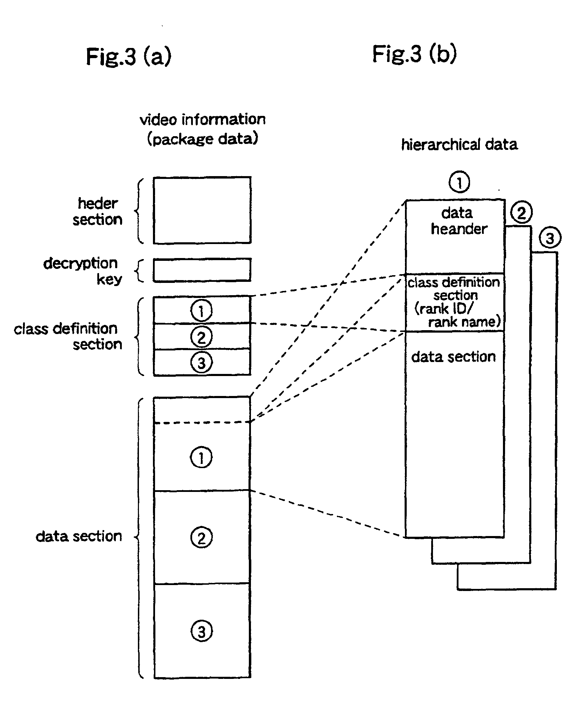

Figure 3 shows another data format of the digital communication signal. In the digital communication signal (video information) shown in figure 3, three pieces of layer data (figure 3(b)) are united as package data (figure 3(a)). As shown in figure 3(a), the data format of the video information in one package data is composed of a header section, a decryption key, a class definition section, and a data section. The header section, the decryption key, and the data section have similar structures as those of the data format shown in figure 2. On the other hand, the class definition section is composed of the rank IDs or rank names of the hierarchical ranks of the data sections in the respective layer data shown in figure 3(b). The rank ID indicates that the layer data is the uppermost layer data, the intermediate layer data, or the lowermost layer data. The rank name is given like "uppermost", "intermediate", or "lowermost".

A predetermined number of files of video information to be converted to the data format having the hierarchical structure comprising a predetermined number of layer data are previously stored in a set in the video information storage means 7.

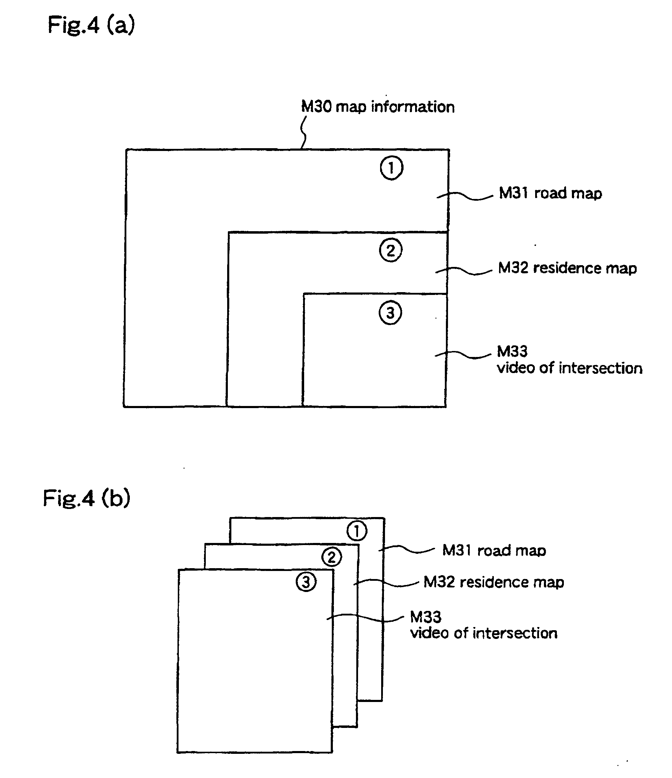

In this first example, as a set of video information mentioned above, still picture map information M30 comprising a set of a road map M31, a residence map M32, and a video of an intersection M33 (see figures 4(a) and 4(b)) is stored in the video information storage means 7. Figure 4(a) shows the respective maps M31, M32, and M33 such that the scales thereof are clarified, and these maps M31, M32, and M33 are of the same display size as shown in figure 4(b). The video information of the respective files (i.e., the road map M31, the residence map M32, and the intersection video M33) is read from the video information storage means 7 under control of the central station side communication control means 5, and is given a decryption key. Thereafter, in the central station side transmission means 8, the respective files of the road map M31, the residence map M32, and the intersection video M33 are converted into the data format shown in figure 2 or 3 such that the respective files construct the package data indicated by ①, ②, ③.

Next, designation of the hierarchical rank of the video information will be described.

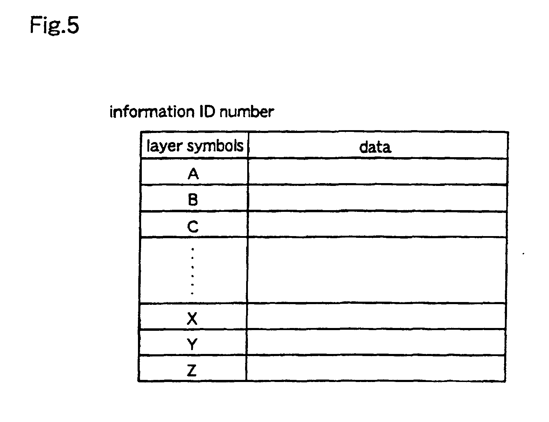

Figure 5 shows hierarchical information for designating the hierarchical rank. As shown in figure 5, the hierarchical information is composed of, for example, an information ID number and layer symbols A, B, C, ... corresponding to the information ID. When receiving a request from the user, a decryption key is sent to the user, and the user accesses data according to the decryption key. At this time, an access key is generated as follows so that an access can be made to a predetermined layer using the key sent to the user.

$$\text{access key} = F \text{ (information ID number, accessible layer)}$$

wherein F is a function to generate the key, and this is a function of the information ID and the accessible layer. The data of the accessible layer can be created by obtaining a binary number on condition that an accessible layer is 1 and an inaccessible layer is 0.

The operation of designating the hierarchical rank will be described in brief. Initially, when receiving a request from the user, an access key is sent to the user, by encryption according to the following multiplication.

$$\text{access key} = \text{(information ID number)} \times \text{(accessible layer)}$$

Then, the data, whose information ID number and layer symbol are clarified, is transmitted by using the central station side transmission means shown in figure 1. The user obtains the accessible layer by performing the following division, from the data transmitted, according to the access key.

$$\text{accessible layer} = \text{access key/information ID number}$$

$$\text{(accessible layer} = F\text{-1 (information ID number, access key))}$$

Through the above-mentioned process, the user can know which layer is receivable, from the data transmitted.

Further, authentication is needed when making an access such as a request from the terminal to the central station. When accessing from a mobile object such as a motorcar, authentication must be performed by a simple operation. As a method of authentication, for example, the terminal ID and the password are automatically sent to the central station 1 for authentication. Or, when an access from a telephone number which has been recorded in advance agrees with the terminal ID, the access is identified as an access from a specific user.

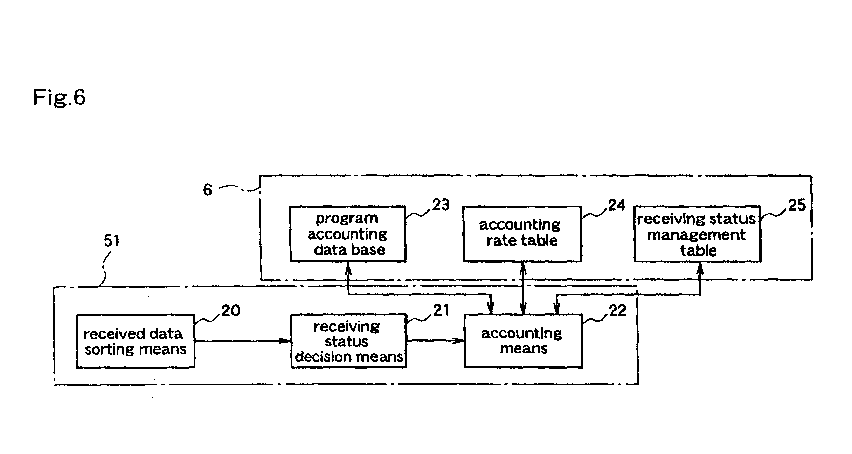

Figure 6 is a block diagram illustrating the accounting control means 51 and the accounting status accumulating means 6. As shown in figure 6, the accounting control means 51 comprises a received data sorting means 20, a receiving status decision means 21, and an accounting means 22.

The received data sorting means 20 receives request information and accounting information from the mobile terminal, and sorts them to extract the accounting data.

The receiving status decision means 21 analyzes the accounting information extracted by the sorting means 20 to decide the receiving status for each data. The accounting information includes receiver attribute information (information as to whether this terminal is a mobile terminal or a fixed terminal), receiving result information (received information number, received file name, normal receiving information in video information reception, error generating status in video information reception, receiving error rate), process instruction information indicating a process instructed by the user to the receiving result (retry or cancel of data transmission), etc.

The accounting means 22 performs accounting based on the accounting information. The feature of this accounting is not to perform accounting when a receiving error occurs, or to reduce the charge according to the accounting rate.

On the other hand, the accounting status accumulating means 6 comprises a program accounting data base 23, an accounting rate table 24, and a receiving status management table 25, as shown in figure 6.

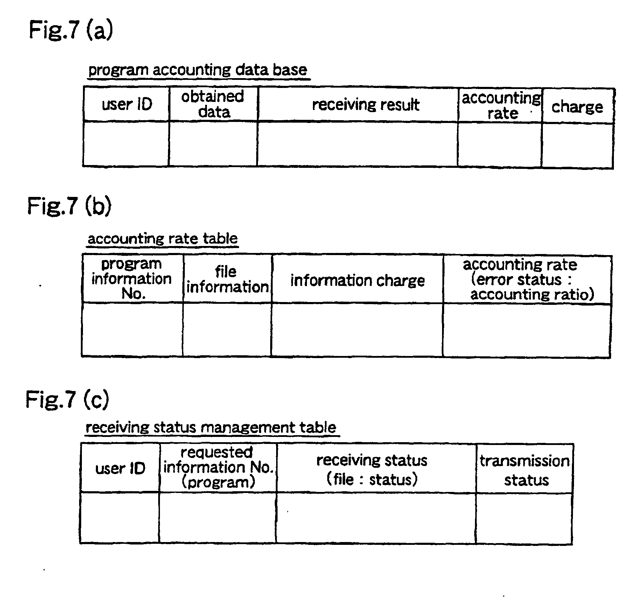

Figures 7(a)-7(c) are diagrams illustrating the detailed structures of the program accounting data base 23, the accounting rate table 24, and the receiving status management table 25.

With reference to figure 7(b), the following data are entered in the accounting rate table 24: number of data (file) included for each program/information number, file information such as a required file name, information charge for each file information, and a accounting rate. The accounting rate is a rate at which accounting is changed or reduced according to the status of receiving error, and 100% (i.e., the full amount of the information charge) is charged when no receiving error has occurred. On the other hand, when a receiving error has occurred, accounting is performed as follows. That is, the information charge is reduced by multiplying the charge with 70%, 50%, ... in accordance with the receiving error rate, such as average error rate, average packet error rate, number of error packets, or continuous packet error. Or, when the receiving error rate is higher than a predetermined rate, the distributed video information is free of charge. Further, although the accounting rate is especially effective to a moving picture, it is also applicable to a file containing data which are available even if some error occurs, such as an image bit map or audio data, and also in this case, efficient accounting can be carried out.

With reference to figure 7(c), the receiving status management table 25 is used for confirming the status such as the requested video information or pay-per-view. The following data are entered in the receiving status management table 25: user ID (terminal ID), request information (program) No. of video information requested by the mobile terminal, receiving status of the requested data, and transmission status of the requested data. The request information No. is created by copying the file information from the accounting rate table 24 in accordance with the request. As the receiving status, information as to whether data is normally received for each request information No. (file name) or a receiving error occurs, is entered. As the transmission status, information such as "receiving completed", "retrying", "retry requested", or "cancel", is entered. In the case of "retrying", information such as the number of times of retry is entered together.

With reference to figure 7(a), the following data are entered in the program accounting data base 23: user ID of mobile terminal (or terminal ID), obtained data (file), receiving result, accounting rate, and charge. These data are created in the stage where the accounting status is defined. The receiving result includes, for example, completion of normal receive, receiving error rate, or cancel information (distinction between user side and transmission side). With respect to the accounting rate, an accounting rate according to the receiving status is created with reference to the accounting rate table of figure 7(b).

A description is now given of the operations of the central station 1 and the mobile terminal 2 constructed as described above.

The video information storage means 7 stores, as the map information M30 shown in figure 4, a road map M31 drawn on a scale of 1 to 25000 (hereinafter referred to as 1/25000 road map), a residence map M32, and a video of an intersection M33 (live view). The user of the mobile terminal 2 requests distribution of the 1/25000 road map M31 as the first request, and requests distribution of the residence map M32 as the second request.

With reference to figure 1, initially, in the mobile terminal 2, the user inputs a request for distribution of the 1/25000 road map M31 through the input/output means 14.

On receipt of this, the mobile terminal side communication control means 15 checks as to whether receiving result information to be accounting information is stored in the internal memory or not. Since this is the first request, no receiving result information is stored in the internal memory. So, the communication control means 15 sends the input request, information indicating that this terminal is a mobile terminal (as the accounting information and the receiver attribute information) and an authentication key (as the read right information), to the mobile terminal side transmission means 17. In this example, since the request is transmitted from the mobile terminal 2 through the telephone line, telephone number notification, which is easy to be authenticated, is utilized as an authentication key. Alternatively, as an authentication key, any of a passnumber, a password, an address code and the like can be used.

On receipt of the data from the communication control means 15, the mobile terminal side transmission means 17 encodes/modulates the request, the read right information, and the accounting information to generate a communication signal, and sends the communication signal through the antenna 18 and the portable telephone line to the central station 1.

The communication signal so transmitted is received by the receiving antenna 3 of the central station 1, and the received signal is input to the central station side receiving means 4.

On receipt of the communication signal, the central station 1 performs the following process to distribute video information to the mobile terminal which has output the request (hereinafter, this process is referred to as "conditional access").

On receipt of the request from the mobile terminal 2, the central station side receiving means 4 demodulates and decodes the communication signal to take the request information, the read right information, and the accounting information, and sends them to the central station side communication control means 5.

On receipt of the data from the central station side receiving means 4, the central station side communication control means 5 performs authentication by using the authentication key as the read right information. This authentication is a process to specify which mobile terminal has output the request. When the authentication has been completed, the communication control means 5 obtains the map information M30 from the video information storage means 7 in accordance with the request information. Further, according to the read right information, the communication control means 5 adds a decryption key and an error correcting code to the map information M30 to be sent to the central station side transmission means 8. The decryption key includes information about how many layer data of the map information 30 can be taken starting from the first layer data, and information for removing the guard protected by software, from each of the files composing the layer data (in this case, information for removing the guard from the 1/25000 road information M31). The error detecting code enables the mobile terminal 2 to detect the receiving result information such as the receiving error rate.

On receipt of the video information M30 of the 1/25000 road map M31, the central station side transmission means 8 encodes, compresses, and packetizes the video information of the 1/25000 road map M31 in accordance with the MPEG 2 coding method to generate a digital communication signal. Next, the transmission means 8 modulates the digital communication signal by the 64 QAM modulation method to generate a transmission signal, and outputs the transmission signal through the transmission antenna 9, on a TV wave, to the mobile terminal 2.

The receiving antenna 10 of the mobile terminal 2 receives the transmission signal transmitted on the TV wave, and sends this signal to the mobile terminal side receiving means 11.

On receipt of the transmission signal, the receiving means 11 demodulates this signal to take the digital communication signal, and sends this signal to the TS separation means 12. Further, the receiving means 11 detects the receiving result information such as the receiving error rate or the information as to whether the transmission signal has been normally received or not, from the communication signal so obtained, in accordance with the error correcting code included in the communication signal, and takes the decryption key from the communication signal. The receiving result information and the decryption key are sent to the mobile terminal side communication control means 15. On receipt of the output from the receiving means 11, the mobile terminal side communication control means 15 stores the receiving result information in the internal memory. Further, the communication control means 15 extracts, from the decryption key, the information about how many layer data are to be taken starting from the first layer data, and the information for removing the guard from the file of the layer data, and outputs the former to the TS separation means 12 and the latter to the data reproduction means 13.

On receipt of the output from the communication control means 15, the TS separation means 12 separates the digital communication signal in accordance with the information about how many layer data are to be taken starting from the first layer data, supplied from the mobile terminal side communication control means 15, and takes the 1/25000 road map M31 from the coded and compressed map information M30 to send this road map M31 to the data reproduction means 13.

On receipt of the output from the TS separation means 12, the data reproduction means 13 removes the guard from the 1/25000 road map M31 in accordance with the information for removing the guard from the file of the layer data, and decodes and decompresses the video information of the coded and compressed 1/25000 road map M31 to reproduce the original video image of the 1/25000 road map M31. The video information of the 1/25000 road map M31 so reproduced is sent to the input/output means 14. At this time, the data reproduction means 13 and the mobile terminal side communication control means 15 perform error correction based on the error correcting code.

On receipt of the video information of the 1/25000 road map M31, the input/output means 14 displays, as an image, the image information of the 1/25000 road map M31 on the liquid crystal panel, and outputs, as a audio, the audio information from the speaker. Thereby, the user can view the video information of the 1/25000 road map M31 for which the user has requested.

Next, a description will be given of the case where the user makes the second request.

In this case, in the mobile terminal 2, the user inputs a request for distribution of the residence map M32 in the input/output means 14. If the receiving status of the 1/25000 road map M31 is not satisfactory, the user requests a retry of sending the road map M31 or cancels the distribution of the road map M31, by using the input/output means 14.

On receipt of the input from the user, the mobile terminal side communication means 15 sends, as accounting information, the receiving result information stored in the internal memory and the information indicating that this terminal is a mobile terminal, together with the input request, to the mobile terminal side transmission means 17. When the above-described "retry" or "cancel" is input, this is sent to the central station 1 as process instruction information instead of the request.

The request and the accounting information are output from the mobile terminal 2 to reach the communication control means 5 of the central station 1, in the same manner as described for the first request.

Next, a description will be given of accounting on the video information distributed in response to the first request. In the above description, the accounting information is transmitted at the time of sending the next (second) request. However, the mobile terminal side communication control means 15 and the mobile terminal side transmission control means 17 may be constructed so that only the accounting information is sent to the central station 1 separately from the request when a predetermined period of time has passed after receiving the video information distributed. Also in this case, accounting will be carried out in the same manner as an according process described hereinafter.

This accounting process is executed between the accounting control means 51 included in the communication control means 5 of the central station 1 and the accounting status accumulating means 6 connected with the central station side communication control means 5.

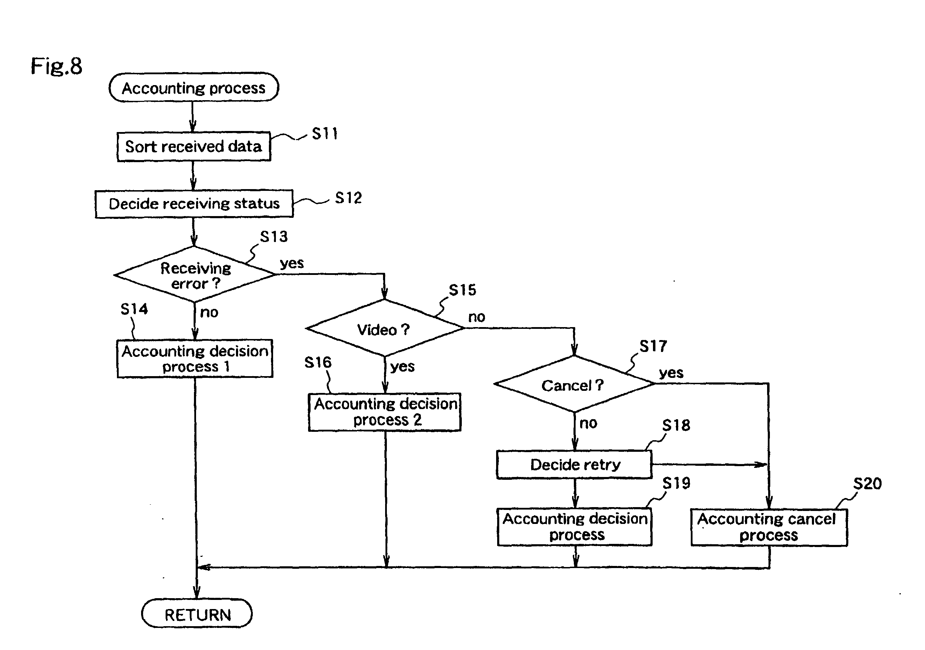

Figure 8 is a flowchart showing the procedure of the accounting process by the accounting means 22.

In this accounting process, initially, the receiving data sorting means 20 shown in figure 6 sorts the accounting information transmitted from the mobile terminal 2 together with the request information to extract only the accounting information (step S11), and the receiving status decision means 21 shown in figure 6 analyzes the extracted accounting information to decide the receiving status of each data and create the receiving status management table shown in figure 7(c) (step S12).

Then, data to be processed is picked up with reference to the data of the receiving status obtained by the receiving status decision means 21, to be subjected to the following process.

Initially, in step S13, it is decided whether some receiving error occurs or not. When the decision is that no receiving error occurs, the control goes to the next step S14.

In step S14, accounting is decided in an accounting decision process (1) described hereinafter. To be specific, in this accounting decision process (1), the program accounting data base shown in figure 7(a) is written when all the required files are set. The request information No. of the user ID is retrieved from the receiving status management table shown in figure 7(c), and a flag indicating "file has been received" is set in a file corresponding to the item showing the receiving status. In this case, the accounting rate is 100%. When the receiving status corresponding to the request information No. is checked, if all the files have been normally received, the program accounting data base shown in figure 7(a) is retrieved. When this program accounting data base does not exist, a new data base is created to record accounting information therein. When the program accounting data base exists already, the data are updated for normal accounting.

On the other hand, when it is decided in step S13 that a receiving error occurs, the control proceeds to step S15.

In step S15, it is decided whether the distributed video information is a video such as an image or an audio, or data. That is, video information such as an image or an audio is sometimes valuable even if it is not satisfactorily received. When the distributed video information is decided as a video in step S15, the control proceeds to step S16.

In step 516, for example, reduction of the information charge is carried out. In this step, as an accounting decision process (2), initially, the request information No. and the receiving status are checked with reference to the receiving status on the receiving status management table shown in figure 7(c). Next, with reference to the accounting rate according to the information No. on the accounting rate table shown in figure 7(b), an accounting rate according to the receiving error recorded in the receiving status management table is obtained. Then, these-accounting data are recorded in the program accounting data base shown in figure 7(a). In this case, as the receiving result, "partial receiving" (received data includes some error and so is not completed, but is available) is recorded, together with the accounting rate and the charge. The program accounting data base can be rewritten when all the requested data are set.

In step S15, when the distributed video information is data (with some receiving error), the control proceeds to step S17.

In step S17, it is decided whether a request for cancel exists or not. When a request for cancel exists in step S17, the control proceeds to an accounting cancel process in step S20. When no request for cancel exists, the control proceeds to a retry process in step S18.

In step S18, it is decided whether a request for retry exists or not. When a request for retry exists, the receiving error status or the number of times of retry is referred to. When there are unusual amount of receiving errors or retry has reached a defined number of times, the control proceeds to the accounting cancel process in step S20.

On the other hand, when there is no request for retry in step S18, the control proceeds to an accounting decision process in step S19.

In step S19, the accounting decision process is performed as follows. Initially, the receiving status management table shown in figure 7(c) is checked to see the request information No. of the corresponding user ID and the receiving status, and further the accounting rate is checked on the accounting rate table shown in figure 7(b). When accounting is possible in spite of "partial receiving", i.e., when specified files in the request information are set, the program accounting data base shown in figure 7(a) is created or updated.

In the accounting cancel process of step S20, accounting is canceled when retry has exceeded a defined number of times or when the user's receiving status is considerable bad. The accounting cancel is performed as follows. The reason for cancel is written in the receiving result in the program accounting data base shown in figure 7(a), and the accounting rate is set to 0 and, simultaneously, the data relating to the item to be canceled is deleted from the receiving status management table shown in figure 7(c).

When accounting on the video information distributed from the central station 1 has been completed and the program accounting data base has been created or updated by any of steps S14, S16 and S19, exact calculation for the accounting is carried out.

As a manner of deciding a reduction in the accounting rate, for example, accounting rate may be reduced significantly for errors in such nature that packet errors occur continuously.

Further, when up link of the accounting information from the mobile terminal is not satisfactory, accounting may be performed on the premise that the accounting information has been normally received.

Further, when the mobile object is, for example, a motorcar, it may be equipped with a system having a fixed power supply so that the mobile terminal can send accounting information even when the engine is stopped and the main power supply is turned off. Or, a motorcar or a mobile terminal may be equipped with a function to give the user warning by alarm or the like when the engine is stopped or the main power supply is turned off.

Further, the central station 1 may transmit the data of the program accounting data base, the accounting rate table, and the receiving status management table to the mobile terminal 2 supplied with the video information, by using the transmission means. Thereby, the user can confirm the accounting status as desired.

After the above-described accounting process, exact calculation for the video distribution charge is performed as follows. The user of each mobile terminal has previously transferred a fixed charge to the central station through a bank or the like, and the central station calculates the video distribution charge in accordance with the above-described program accounting data base. Or, the central station collects the video distribution charge from the bank account of the user of each mobile terminal.

As described above, in the method of distributing video information to a mobile object by digital radio communication, since accounting on distributed video information in the central station 1 is performed in accordance with the accounting information supplied from the mobile terminal 2 which has output the request for the video information, accounting is performed only when the video information has been normally received by the mobile terminal 2, or appropriate accounting based on the receiving error rate of the video information is performed.

While in this first example distribution of one video information is requested at one time (one request), two or more pieces of video information may be requested at one time. Also in this case, the requested video information is captured as the respective files of the layer data shown in figures 2 and 3 and the same processes as mentioned above are carried out.

Furthermore, while in this first example a modulator based on 64 QAM modulation is used in the central station side transmission means 8 or the mobile terminal side receiving means 11, the modulator is not restricted thereto. For example, a modulator based on QPSK modulation may be used.

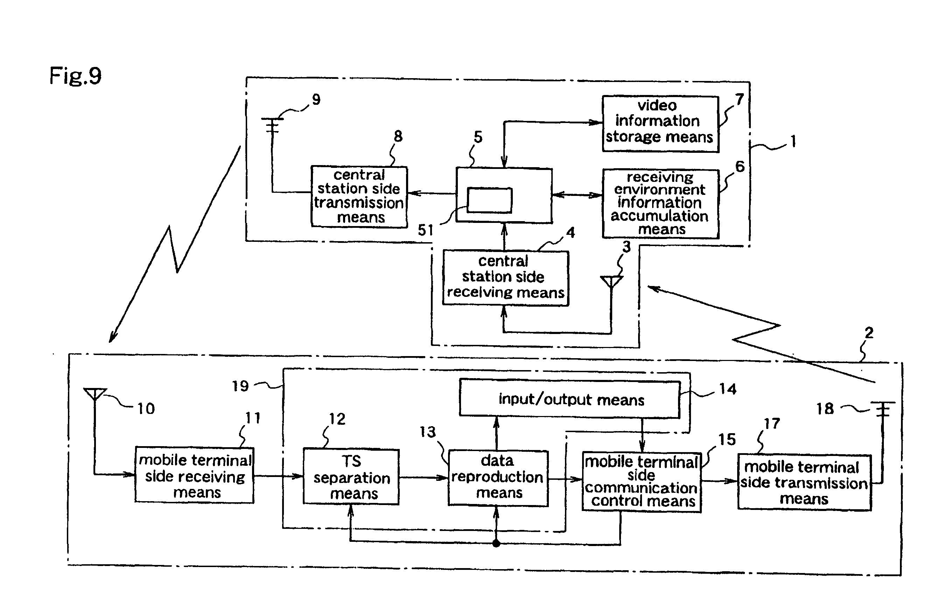

Figure 9 is a block diagram illustrating the structures of a central station and a mobile terminal used for a method of distributing video information to a mobile object by digital radio communication, according to a modification of the first example. According to this modification, in the mobile terminal 2, there is no signal line connecting the mobile terminal side receiving means 11 directly to the mobile terminal side communication control means 15. Therefore, the receiving error rate detected by the receiving means 11 is transmitted through the TS separation means 12 and the data reproduction means 13 to the communication control means 15. Other components and operations thereof are identical to those already described above.

Example 2.

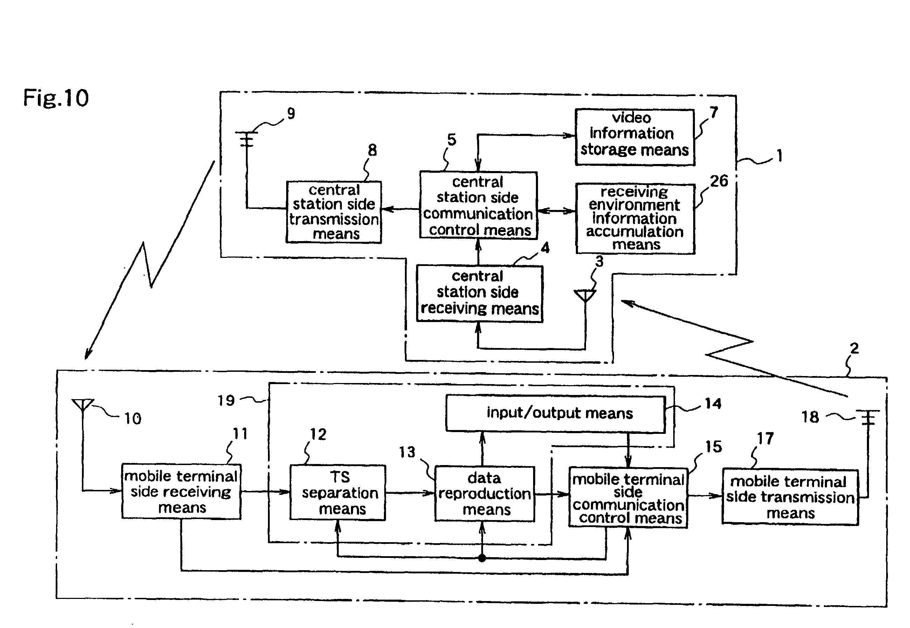

Figure 10 is a block diagram illustrating structures of a central station unit and a mobile terminal unit which are used in a method for distributing video information to a mobile object by digital radio communication according to a second example.

In figure 10, reference numeral 1 designates a central station unit placed on the ground (hereinafter referred to simply as a central station), and numeral 2 designates a mobile terminal unit mounted on a mobile object (hereinafter referred to simply as a mobile terminal). The central station 1, at least one mobile terminal 2, and at least one fixed station (not shown) placed on the ground constitute a system for executing the video information distribution method according to this second example. Further, as examples of mobile objects, there are a motorcar, a train, a ship, an airplane, etc. In this second example, a motorcar is taken as an example.

The above-mentioned video information is composed of data including at least image information. Video data, data files, and the like are included in the video information. The video data is composed of image information and audio information, and the video data includes video data comprising still pictures used for distribution of teletext or live view and video data comprising moving pictures used for distribution of video programs. Further, the data files include map data, Web data, home page, male, and the like. This second example will be described taking, as an example, video information comprising road map data (hereinafter referred to simply as a road map), residence map data (hereinafter referred to simply as a residence map), and a still picture such as a video of an intersection which is a live view. The road map and the residence map may be either video image data or digital data which represents a sentence relating to the map, such as link information.

Further, as for a communication line from the mobile terminal 2 to the central station 1, any radio communication line may be used as long as it is capable of data communication. In this second example, a portable telephone line is employed.

On the other hand, as for a method of distributing video information from the central station 1 to the mobile terminal 2, any method may be employed as long as it employs radio communication capable of digital data communication. In this second example, a distribution method according to an ordinary TV broadcasting system which radiates a radio wave to space for distribution of video information to the terminal, is employed. Accordingly, a transmission antenna 9 of the central station 1 is placed in a high ground, such as the top of a mountain or the rooftop of a tall building. Hence, the receiving environment of the mobile terminal varies due to multi-pass phasing or ghost which occurs depending on the area where the motorcar equipped with the mobile terminal runs. Or, the mobile terminal cannot receive the radio wave when the motorcar is in a tunnel.

The central station 1 comprises a receiving antenna 3, a central station side receiving means 4, an accounting environment information accumulation means 26, a video information storage means 7, a transmission antenna 9, a central station side transmission means 8, and a central station side communication control means 5.

The receiving antenna 3 receives a communication signal transmitted from the mobile terminal 2 through the portable telephone line. The central station side receiving means 4 demodulates and decodes the communication signal received by the antenna 3 and takes a request, read right information, and accounting information from the communication signal. The accounting environment information accumulation means 26 accumulates the accounting environment information. The video information storage means 7 stores plural pieces of video information to be distributed to the mobile terminal 2. The central station side transmission means 8 encodes and compresses the received video information, packetizes (multiplexes) the coded and compressed information to obtain a digital communication signal, modulates a carrier with the digital communication signal to superpose the digital communication signal on the carrier to obtain a transmission signal, and transmits the transmission signal on a TV wave from the transmission antenna 9 to the mobile terminal 2. The central station side communication control means 5 takes video information corresponding to the request received by the central station side receiving means 4, from the video information storage means 7, to output the video information. Further, the communication control means 5 stores the receiving environment information taken by the receiving means 4 in the receiving environment information storage means 26. Based on the receiving environment information taken by the receiving means 4 or the receiving environment information obtained from the receiving environment accumulation means 26, the communication control means 5 switches the method for ensuring the transmission quality relating to code errors of the video information to be transmitted to the mobile terminal 2, by using the central station side transmission means 8.

In the central station side transmission means 8, coding and compression of video information is performed according to, for example, a coding method based on MPEG2.

Further, the central station side transmission means 8 includes the following two modulators: a modulator which modulates data by 64 QAM (quadrature amplitude shift keying) modulation, and a modulator which modulates data by QPSK (quadrature phase shift keying) modulation. The transmission means 8 selects one of the above-mentioned two modulators according to an instruction from the communication control means 5 to connect the modulator with the transmission circuit, whereby the received video information can be modulated by one of the above-mentioned two modulation methods. With respect to the 64 QAM modulation, although its transmission capacity is relatively large, it is not resistive against occurrence of code errors in the transmission path. On the other hand, with respect to the QPSK modulation, although its transmission capacity is relatively small, it is resistive to occurrence of code errors in the transmission path and, especially, ghost and multi-pass phasing hardly occur in the QPSK modulation.

Further, the central station side communication control means 5 sets the redundancy of transmission data. including video information in three grades, adds an error correcting code of a bit width according to the redundancy of each grade to the video information obtained from the video information storage means 7, and outputs the video information to the transmission means 8.

For example, the central station side communication control means 5 is implemented by a CPU (central processing unit) of a computer, the accounting environment information accumulation means 26 is implemented by a main memory of the computer, and the video information storage means 7 is implemented by an information recording medium such as a hard disk and an information recording medium driving means such as a hard disk drive.

The mobile terminal 2 comprises a receiving antenna 10, a mobile terminal side receiving means 11, a TS separation means 12, a data reproduction means 13, an input/output means 14, a transmission antenna 18, a mobile terminal side transmission means 17, and a mobile terminal side communication control means 15.

The receiving antenna 10 receives a transmission signal transmitted on a TV wave from the central station 1. The mobile terminal side receiving means 11 demodulates the transmission signal received by the receiving antenna 10 to obtain a digital communication signal, and detects a code error rate (hereinafter referred to as receiving error rate) of the digital communication signal. The TS separation means 12 separates the digital communication signal obtained in the mobile terminal side receiving means 11, and takes the coded and compressed video information from the digital communication signal. The data reproduction means 13 decodes and decompresses the coded and compressed video information obtained in the TS separation means 13 to reproduce the original video information, and extracts the error correcting codes from the coded and compressed video information. The input/output means 14 has an image display means, an audio output means, and an input means to which a request is input (these means are not shown in the figure). The input/output means 14 displays the image information included in the video information reproduced by the data reproduction means 13, as an image, on a screen of the image display means, and outputs the audio information as an audio from the audio output means. The mobile terminal side transmission means 17 encodes and modulates the received information to obtain a communication signal, and transmits the communication signal to the central station 1 through the transmission antenna 18 and the portable telephone line. The mobile terminal side communication control means 15 transmits information indicating that this terminal is a mobile terminal and the receiving error rate detected by the receiving means 11, as receiving environment information, to the transmission means 17 together with the request input through the input/output means 14. Further, when reproducing the video information, the communication control means 15 allows the data reproduction means 13 to correct errors of the decoded and decompressed video information, in accordance with the error correcting codes output from the data reproduction means 13. The TS separation means 12, the data reproduction means 13, and the input/output means 14 constructs the reproduction means 19.

The mobile terminal side receiving means 11 includes the following two demodulators (not shown): a demodulator which demodulates data in accordance with 64 QAM (quadrature amplitude shift keying) modulation, and a demodulator which demodulates data in accordance with QPSK (quadrature phase shift keying) modulation. These demodulators are connected in parallel with the receiving circuit. Accordingly, when a received signal which has been modulated by either the 64 QAM modulation or the QPSK modulation is input to the two demodulators, one of the demodulators which agrees with the modulation method of the input signal operates, i.e., demodulates the input signal and outputs the demodulated signal to the receiving circuit.

In the input/output means 14, for example, the image display means is a liquid crystal display, the input means is a structure capable of inputting character information or user's instruction by using an input pen through an input image displayed on the liquid crystal display, and the audio output means is a speaker.

Further, the mobile terminal side communication control means 15 is implemented by a CPU of a microcomputer and contains an internal memory (not shown) which is implemented by a main memory of the microcomputer. The internal memory constitutes a storage means for temporarily storing the receiving error ratio detected by the mobile terminal side receiving means 11.

Further, the communication control means 15 of the mobile terminal 2 outputs an ID number for receiving distributed video information and accounting information for the distribution of the video information, together with the request, to the communication control means 5 of the central station 1. On receipt of these data, the communication control means 5 performs accounting based on the accounting information, and collates the ID number with recorded mobile terminals. When the result of the collation authenticates that the mobile terminal which has made the request is recorded, the communication control means 5 distributes the requested video information to the mobile terminal 2 after adding a decryption key to the video information. In the mobile terminal 2, the mobile terminal side communication control means 15 decrypts the coded video information by using the decryption key, and allows the TS separation means 12 and the data reproduction means 13 to reproduce the distributed image information in accordance with the result of the decryption. Since the authentication process and the accounting process do not directly relate to ensuring the transmission quality relating to code errors according to the invention, these processes are not described.

Next, a description is given of the structure of means for ensuring the transmission quality relating to code errors which occur when video information is transmitted.

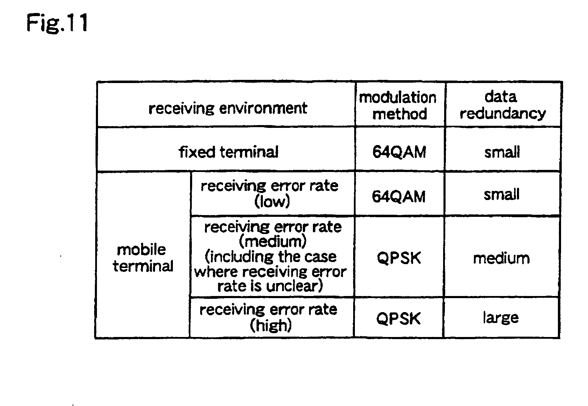

Figure 11 illustrates a transmission quality management table used by the control station side communication means, for ensuring the transmission quality relating to code errors which occur when video information is transmitted.

In the transmission quality management table, the receiving environment is classified roughly into "fixed terminal" and "mobile terminal". In case of mobile terminal, the receiving error rate is divided into three, i.e., "low", "medium", and "high". Further, the modulation method is "64 QAM modulation" when the receiving environment is "fixed terminal". When the receiving environment is "mobile terminal", the modulation method is "64 QAM modulation", "QPSK modulation", and "QPSK modulation" when the receiving error rate is "low", "medium", and "high", respectively. Further, the data redundancy is "small" when the receiving environment is "fixed terminal". When the receiving environment is "mobile terminal", the data redundancy is "small", "medium", and "large", when the receiving error rate is "low", "medium", and "high", respectively. Further, when the receiving error rate is unknown as in the case where the request from the mobile terminal is the first request, the receiving error rate is treated as "medium". Moreover, the ranges of "low (small)", "medium", and "high (large)" of the receiving error rate and the data redundancy are appropriately set based on an experiment or the like. When there are plural requests from different mobile terminals, a modulation method suitable for the receiving environment of a mobile terminal in the worst receiving environment, is selected. With respect to the redundancy, since the error correcting code for changing the redundancy is added to the distributed video information, the redundancy can be adapted to each mobile terminal, and therefore, a redundancy is selected for each mobile terminal according to its receiving environment. In this second example, the reason why, in order to ensure the transmission quality relating to code errors, it is allowed to increase the data redundancy in spite of reduction in the transmission capacity, is because massive transmission capacity is not necessarily required in the video information distribution system of this second example.

On receipt of the receiving environment information, the central station side communication control means 5 changes the modulation method and the data redundancy in accordance with the table, thereby ensures the transmission quality relating to code errors when transmitting the video information.

A description is given of the structure for changing the data redundancy.

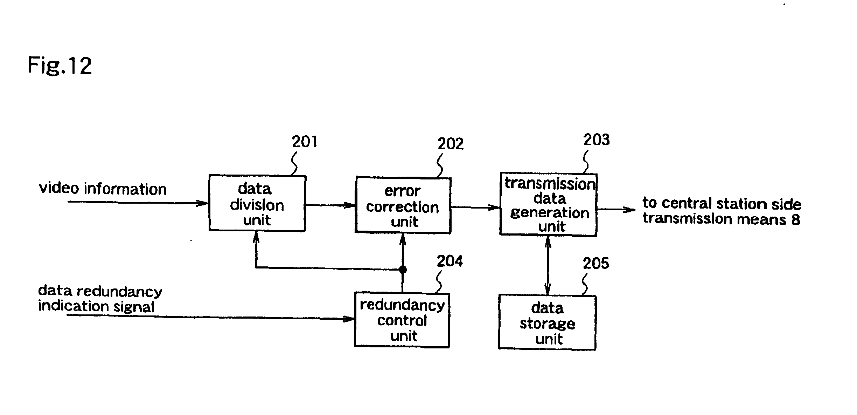

Figure 12 is a block diagram illustrating the structure of part of the central station side communication control means 5, wherein error correcting codes are added to the video information.

In figure 12, reference numeral 204 denotes a redundancy control unit. The communication control means 5 selects the data redundancy (one of "small", "medium", "large") according to the receiving environment information as described for figure 11, and inputs this redundancy as a data redundancy indication signal to the redundancy control unit 204. Then, the redundancy control unit 204 indicates the length of one of plural data into which the video information is divided (hereinafter referred to as divided data), and an error correcting code to be added to one divided data, according to the data redundancy indicated by the data redundancy indication signal. At this time, the redundancy control unit 204 reduces the length of the divided data or more error correcting codes are added to increase the data redundancy. In this second example, for example, an error correcting code of a larger bit width is added.

Furthermore, reference numeral 205 denotes a data storage unit for storing data. Numeral 201 denotes a data division unit for dividing the video information obtained from the video information storage means 7 into plural data each having the length indicated by the redundancy control unit 204. Numeral 202 denotes an error correction unit for adding error correcting codes to the divided data obtained in the data division unit 201. Numeral 203 denotes a transmission data generation unit. This unit 203 stores the divided data with the error correcting codes into the storage unit 205, combines a predetermined number of data amongst the divided data in the storage unit 205 according to a predetermined order to generate transmission data, and outputs the transmission data to the central station side transmission means 8.

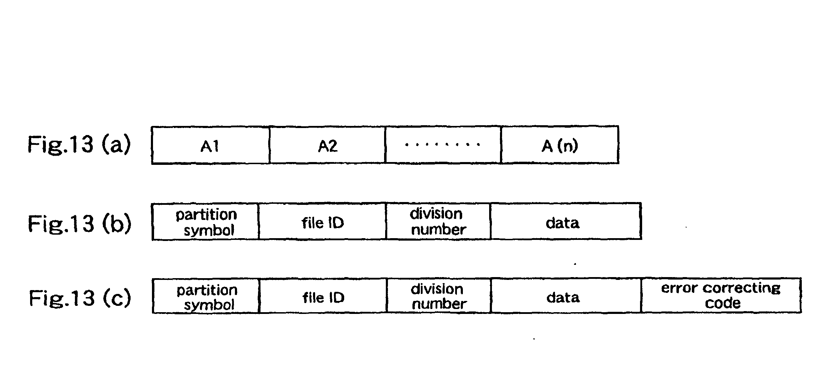

Figures 13 (a) - 13 (c) are schematic diagrams for explaining how the data division unit 201 and the error correction unit 202 shown in figure 12 process the input data. Figure 13(a) shows the state where one video information is divided into plural divided data, figure 13(b) shows the state where divided data attribute information is added to one divided data, and figure 13(c) shows that state where an error correcting code is added to one divided data to which the division data attribute information has already been added.

With reference to figures 13(a)-13(c), initially, the data division unit 201 divides the video information (file) into a predetermined number of pieces indicated by the redundancy control unit 204. For example, a file A is divided into n pieces of data A1~An. Next, divided data attribute information such as a partition symbol, a file ID, and a division number, is added before each divided data. Since this information is added before each divided data, when the divided data are combined into a data sequence by the transmission data generation unit 203, the partition of each divided data in the data sequence is clear, whereby the divided data can be recomposed when reproducing the video information at the mobile terminal side. Instead of adding the partition symbol at the head of the divided data, a terminal symbol may be added at the end of the divided data.

Further, the error correction unit 202 adds an error correcting code indicated by the redundancy control unit 204 at the end of the divided data to which the divided data attribute information has been added.

Then, the divided data so processed are combined by the transmission data generation unit 203. The order in which the divided data are combined is not necessarily the same as the order of in which the file was divided, that is, the divide data may be combined randomly. To combine the divided data randomly is effective for improvement of error correcting ability because, in this case, errors are dispersed in video data such as a still picture or a moving picture. Further, as well as combining divided data, it is also possible to combine files when transmitting a plurality of files. Also in this case, the files can be combined randomly.

In the mobile terminal 2, the transmission control means 15 and the data reproduction means 13 separate the transmission data into the divided data with the error correcting codes in accordance with the partition symbols, perform error correction, and restore the file in accordance with the file ID and the division number. In this case, even when the partition symbol is lost during the transmission, data reproduction is possible by maintaining the data length after the addition of the error correcting codes constant for a predetermined period of time.

Next, a description will be given of the operations of the central station 1 and the mobile terminal 2 so constructed, with reference to figures 10 and 11.

It is assumed that a road map drawn on a scale of 1 to 50000 (1/50000 road map), a road map drawn on a scale of 1 to 25000 (1/25000 road map), a residence map, and a video of an intersection (live view) are stored in the video information storage means 7. The user of the mobile terminal 2 requests distribution of the 1/5000 road map as a first request, distribution of the 1/25000 road map as a second request, distribution of the video of the intersection as a third request, and distribution the residence map as a fourth request.

With reference to figures 10 and 11, initially, in the mobile terminal 2, the user inputs a request for distribution of the 1/50000 road map by using the input/output means 14.

On receipt of this input, the mobile terminal side communication control means 15 checks as to whether any receiving error rate is stored in the internal memory or not. Since this is the first request, no receiving error rate is stored in the internal memory. So, the communication control means 15 sends the input request and information indicating that this terminal is a mobile terminal, to the mobile terminal side transmission means 17.

On receipt of the data from the communication control means 15, the transmission means 17 encodes/modulates the request and the information about that this terminal is a mobile terminal to generate a communication signal, and sends the communication signal through the antenna 18 and the portable telephone line to the central station 1.

The communication signal so transmitted is received by the receiving antenna 3 of the central station 1, and the received signal is input to the central station side receiving means 4.

On receipt of the communication signal, the receiving means 4 demodulates and decodes the communication signal to obtain the request and the information about that the terminal is a mobile terminal, and sends these to the communication control means 5.

On receipt of the output from the receiving means 4, the communication control means 5 stores the information indicating that the terminal is a mobile terminal into the receiving environment accumulation means 26, and obtains the video information of the 1/50000 road map requested by the user from the video information storage means 7. Next, with reference to the transmission quality management table, the communication control means 5 decides that the modulation method should be "QPSK modulation" because the receiving environment of the mobile terminal 2 is "mobile terminal", and decides that the data redundancy should be "medium" because the receiving error rate is unclear. Next, the communication control means 5 adds an error correcting code having a bit width corresponding to the data redundancy "medium" to the video information of the 1/50000 road map to generate transmission data, and sends this transmission data to the transmission means 8. Further, the communication control means 5 outputs an instruction that the modulation method is "QPSK modulation" to the transmission means 8.

On receipt of the data of the 1/50000 road map and the instruction from the transmission control means 5, the transmission means 8 encodes the data of the 1/50000 road map by a coding method based on MPEG 2 to generate a coded/multiplexed digital communication signal, and modulates the digital communication signal by using a modulator based on QPSK modulation to generate a transmission signal. This communication signal is transmitted through the transmission antenna 9, on a TV wave, to the mobile terminal 2.

On receipt of the transmission signal from the central station 1, the mobile terminal side receiving means 11 demodulates the transmission signal to obtain the digital communication signal, and sends this signal to the TS separation means 12. Further, the receiving means 11 detects the receiving error rate from the digital communication signal and outputs this to the communication control means 15. It is assumed that the receiving error rate is "high" because the motorcar equipped with the mobile terminal 2 is now running in an area to which the wave from the central station 1 is hard to reach.

The communication control means 15 stores the receiving error rate "high" into the internal memory.

On the other hand, on receipt of the digital communication signal, the TS separation means 12 separates the digital communication signal to obtain the coded and compressed transmission data of the 1/50000 road map, and sends this data to the data reproduction means 13.

On receipt of the data from the TS separation means 12, the data reproduction means 13 decodes and decompresses the coded and compressed transmission data to obtain the transmission data, and stores this data. On the other hand, the transmission data is sent to the communication control means 15. The communication control means 15 checks.the transmission data for code error, and sends error correcting information based on the result of the check to the data reproduction means 13. The data reproduction means 13 reproduces the video information of the original 1/50000 road map from the transmission data after correcting the error according to the error correcting information, and sends the reproduced video information of the 1/50000 road map to the input/output means 14.

On receipt of the video information, the input/output means 14 displays image information of the 1/50000 road map as an image on the liquid crystal panel, and outputs audio information thereof as an audio from the speaker. Thereby, the user can view the video information of the 1/50000 road map.

Next, a description is given of the case where the user makes the second request.

In this case, in the mobile terminal 2, the user inputs a request for distribution of the 1/25000 road map by using the input/output means 14.

On receipt of this input, the mobile terminal side communication control means 15 checks as to whether any receiving error rate is stored in the internal memory or not, and sends the stored receiving error rate "high" to the transmission means 17, together with the request and the information indicating that this terminal is a mobile terminal.

The request, the information about that this terminal is a mobile terminal, and the receiving error rate "high" are transmitted from the mobile terminal 2 to the communication control means 15 of the central station 1, in the same manner as already described for the first request.

On receipt of the request, the information, and the receiving error rate, the central station side communication control means 5 stores the information indicating that the terminal is a mobile terminal and the receiving error rate "high" into the receiving environment accumulation means 26, and obtains the video information of the 1/25000 road map requested by the user from the video information storage means 7. Next, with reference to the transmission quality management table, the communication control means 5 decides that the modulation method should be "QPSK modulation" because the receiving environment of the mobile terminal 2 is "mobile terminal", and decides that the data redundancy should be "large" because the receiving error rate is "high". Next, the communication control means 5 adds an error correcting code having a bit width corresponding to the data redundancy "large" to the video information of the 1/25000 road map to generate transmission data, and sends this transmission data to the transmission means 8. Further, the communication control means 5 outputs an instruction that the modulation method is "QPSK modulation" to the transmission means 8.

The video information of the 1/25000 road map so transmitted is processed in the same manner as described for the first request, i.e., it is coded and compressed by a coding method based on MPEG2 and modulated by a modulator based on QPSK modulation. Thereafter, the video information of the 1/25000 road map so processed is transmitted, as a transmission signal, from the central station 1 to the receiving means 11 of the mobile terminal 2.

The mobile terminal side receiving means 11 demodulates the transmission signal by using a decoder based on QPSK modulation to obtain a digital communication signal, and sends this to the TS separation means 12. Further, the receiving means 11 detects the receiving error rate from the digital communication signal and outputs this to the communication control means 15. It is assumed that the motorcar equipped with the mobile terminal 2 is still running in an area to which the wave from the central station 1 is hard to reach, and the receiving error rate is lowered within the range of "high".

The receiving error rate is stored in the internal memory of the communication control means 15, in the same manner as described for the first request.

Further, the digital communication signal is subjected to code error correction and then reproduced to the video information of the original 1/25000 road map, in the same manner as described for the first request. The image information of the 1/25000 road map is displayed as an image on the liquid crystal panel of the input/output means, and the audio information is output as an audio from the speaker. Thereby, the user can view the video information of the 1/25000 road map.

Next, a description is given of the case where the user makes the third request.

In this case, in the mobile terminal 2, the user inputs a request for distribution of the video of the intersection by using the input/output means 14.

The request so input is transmitted from the mobile terminal 2 to the central station 1 in the same manner as described for the second request, and the requested video information of the intersection is distributed as a transmission signal from the central station 1 to the receiving means 11 of the mobile terminal 2 in the same manner as described for the second request.

The mobile terminal side receiving means 11 demodulates the transmission signal obtain a digital communication signal, and sends this to the TS separation means 12. Further, the receiving means 11 detects the receiving error rate from the digital communication signal and outputs this to the communication control means 15. It is assumed that the motorcar equipped with the mobile terminal 2 is now running in an area to which the wave from the central station 1 reaches satisfactorily, and the receiving error rate is "low".

The receiving error rate is stored in the internal memory of the communication control means 15, in the same manner as described for the second request.

Further, the digital communication signal is subjected to code error correction and then reproduced to the video information of the original video of the intersection, in the same manner as described for the second request. The image information thereof is displayed as an image on the liquid crystal panel of the input/output means, and the audio information is output as an audio from the speaker. Thereby, the user can view the video information of the video of the intersection.

Next, a description is given of the case where the user makes the fourth request.

In this case, in the mobile terminal 2, the user inputs a request for distribution of the residence map by using the input/output means 14.

On receipt of this input, the mobile terminal side communication control means 15 sends the receiving error rate "low" stored in the internal memory to the transmission means 17, together with the request and the information indicating that this terminal is a mobile terminal.

The request, the information about that this terminal is a mobile terminal, and the receiving error rate "low" are transmitted from the mobile terminal 2 to the communication control means 15 of the central station 1, in the same manner as already described above.

On receipt of the request, the information, and the receiving error rate, the central station side communication control means 5 stores the information indicating that the terminal is a mobile terminal and the receiving error rate "low" into the receiving environment accumulation means 26, and obtains the video information of the residence map requested by the user from the video information storage means 7. Next, with reference to the transmission quality management table, the communication control means 5 decides that the modulation method should be "64QAM modulation" and the data redundancy should be "small" because the receiving environment of the mobile terminal 2 is "mobile terminal" and the receiving error rate is "low". Next, the communication control means 5 adds an error correcting code having a bit width corresponding to the data redundancy "small" to the video information of the residence map to generate transmission data, and sends this transmission data to the transmission means 8. Further, the communication control means 5 outputs an instruction that the modulation method is "64QAM modulation" to the transmission means 8.

The video information of the residence map is distributed from the central station 1 to the mobile terminal 2, and reproduced to the original video information of the residence map to be displayed as an image and output as an audio by the input/output means 14, in the same manner as described above. Thereby, the user can view the video information of the resistance map.

As described above, according to the second example, the mobile terminal 2 transmits the receiving environment information to the central station 1 together with the request, and the central station 1 switches the method for ensuring the transmission quality relating to code errors in distribution of the requested video information, in accordance with the receiving environment information. Therefore, the method for ensuring the transmission quality relating to code errors can be selected according to the receiving environment of the mobile terminal 2, thereby ensuring the transmission quality relating to code errors of the video information distributed to the mobile terminal 2.

While in this second example distribution of video information from the central station 1 to the mobile terminal 2 is performed by ordinary TV broadcasting, it may be performed by satellite communication broadcasting.

Further, while in this second example the modulation method is switched between two methods, it may be switched amongst three or more modulation methods.

Furthermore, while in this second example video information composed of still pictures is employed, video information composed of moving pictures, such as a video program, may be employed.

Moreover, while in this second example one video information is requested at one time (request), in the case of requesting plural pieces of video information at one time, the central station 1 distribute the plural pieces of video information in the same manner as described above.

Further, while in this second example an input screen and an input pen are used to input a request in the input/output means 14 of the mobile terminal 2, a request may be input by means of a voice.

Example 3.

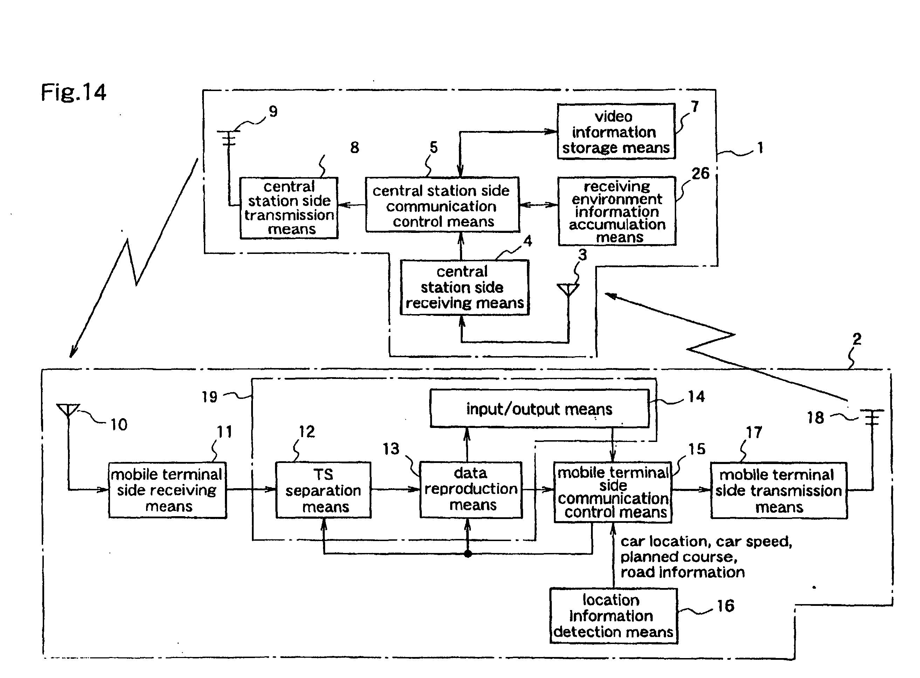

Figure 14 is a block diagram showing a central station unit (central station) and a mobile terminal unit (mobile terminal) for use in a method for distributing video information to a mobile object by a digital radio communication according to a third example.

In the figure, reference numerals as those shown in figure 10 denote the same or the corresponding parts. The difference between the second example and the third example is discussed briefly as follows. In this third example, in the mobile terminal 2, the mobile terminal side receiving means 11 does not detect a receiving error rate. Instead, there is provided location information detection means 16 which detects a location of a car (car location) on which the mobile terminal 2 is mounted, a speed of the car (car speed), a planned course of the car, and road information as receiving environment information. In the central station 1, the central station side communication control means 5 is adapted to perform switching of modulation and data redundancy of video information to be transmitted, according to the receiving environment information.

The location information detection means 16 includes a car navigation device, for utilizing a car navigation system to obtain the car location, the car speed, the planned course, and the road information. For instance, the location information detection means 16 uses a GPS (global positioning system) satellite to detect the car location, and uses a speed indicator to detect the car speed. The detection means 16 also creates information of the planned course according to the car location and an input by the user, and obtains road information about a road corresponding to the planned course such as traffic congestion information or the existence/non-existence of road construction, from a center of the car navigation system, according to operation by the user.

The mobile terminal side communication control means 15 transmits the car location, the car speed, the planned course, and the road information as the receiving environment information, a request, and information indicating that this terminal is a mobile terminal, to the central station 1, via the mobile terminal side transmission means 17.

In the central station 1, the central station side communication control means 5 receives the request and the receiving environment information transmitted from the mobile terminal 2 through the receiving antenna 3 and the central station side receiving means 4 and, according to the receiving environment information, performs switching of the modulation and data redundancy of the video information to be transmitted.

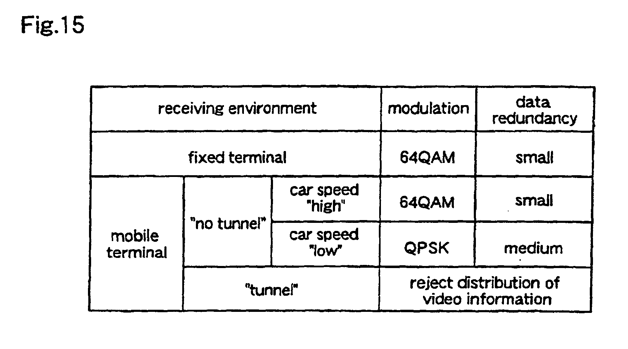

The control means 5 performs this switching with reference to a transmission quality management table shown in figure 15.

As can be seen from the table shown in figure 15, the receiving environment is classified into the fixed terminal and the mobile terminal. As for the mobile terminal, the existence/non-existence of a tunnel in the planned course is shown as "tunnel"/"no tunnel". When there is "no tunnel" present in the planed course, the car speed "high"/"low" is shown. When the receiving environment is the fixed terminal, like the first example, the modulation is "64QAM" and the data redundancy is "small". When the receiving environment is the mobile terminal and there is a " tunnel" in the planned course, distribution of the requested video information is rejected. When the receiving environment is the mobile terminal, there is "no tunnel" in the planned course, and the car speed is "high", the modulation is 64QAM and the data redundancy is "small". When the receiving environment is the mobile terminal, there is "no tunnel" in the planned course, and the car speed is "low", the modulation is QPSK and the data redundancy is "medium".

For instance, in a case where there is a tunnel in the planned course, receiving the receiving environment information, the control means 5 decides that the mobile terminal 2 will be almost around the tunnel at time when requested video information is to be distributed, according to the car speed and the information of the existence/non-existence of road construction or traffic congestion obtained from the road information, and thereby handles the receiving environment as "tunnel", or otherwise, it handles the receiving environment as "no tunnel".

Operations of the central station 1 and the mobile terminal 2 after transmission of the requested video information are identical to those shown in the second example.

Thus, in accordance with the third example, the mobile terminal 2 detects the car speed of the car on which the mobile terminal 2 is mounted, and transmits this car speed to the central station 1 as the receiving environment information. Since the receiving error rate varies according to the speed of the car, it is possible to select the method for ensuring the transmission quality relating to the code error according to the car speed, and thereby reliably ensure the transmission quality relating to the code error of the video information to be distributed to the mobile terminal 2.

In addition, in accordance with the third example, the mobile terminal 2 uses the car navigation to generate the planned course information of the car on which the mobile terminal 2 is mounted, and transmits this planned course information to the central station 1 as the receiving environment information. Hence, depending upon where or not there is a tunnel and the like in the planned course, it is possible to select the method for ensuring the transmission quality relating to the code error, and thereby reliably ensure the transmission quality relating to the code error of the video information to be distributed to the mobile terminal 2.

Example 4.

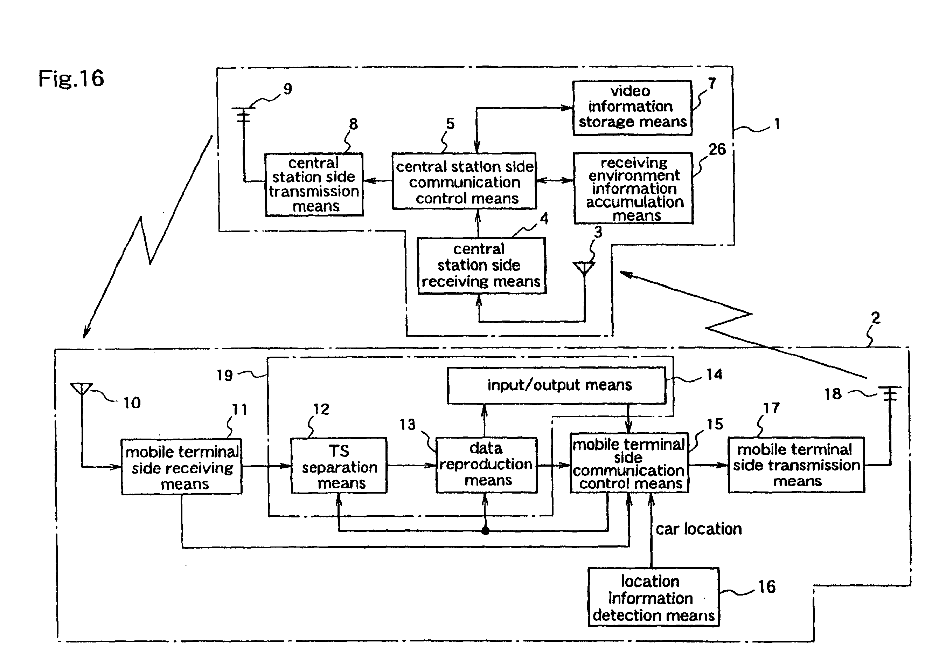

Figure 16 is a block diagram showing a central station unit and a mobile terminal unit for use in a method for distributing video information to a mobile object by a digital radio communication according to a fourth example.

In the figure, reference numerals as those shown in figure 10 denote the same or the corresponding parts. The difference between the second example and the fourth example is discussed briefly as follows. In this fourth example, in the mobile terminal 2, there is provided location information detection means 16 for detecting a car location of the mobile terminal 2 as receiving environment information, while in the central station 1, the central station side communication control means 5 is adapted to create a map showing a receiving environment of a broadcasting area by using the car location and the receiving error rate, and perform switching of modulation and data redundancy of video information to-be-transmitted according to the created map.

The location information detection means 16 includes a car navigation device for utilizing the car navigation system to obtain the car location.

The mobile terminal side communication control means 15 transmits information indicating that this terminal is a mobile terminal, the receiving error rate, and the car location as the receiving environment information together with a request, to the central station 1, via the mobile terminal side transmission means 17.

In the central station 1, the central station side communication control means 5 receives the request and the receiving environment information transmitted from the mobile terminal 2, via the receiving antenna 3 and the central station side receiving means 4 and stores the receiving environment information in the receiving environment information accumulation means 26. In this case, the control means 5 estimates the location of the mobile terminal 2 which will receive the video information requested by itself, from the location of the mobile terminal 2 detected every time it makes a request, creates the map showing receiving error rates with respect to locations in the broadcasting area in such a way that the estimated location corresponds to the receiving error rate at the receiving of the requested video information, and stores the map in the receiving environment information accumulation means 26. Receiving the request; the car location, and the receiving error rate, the control means 5 reads the map from the accumulation means 26, corrects the map according to the received car location and receiving error rate, and updates the map stored in the accumulation means 26 into a corrected map.

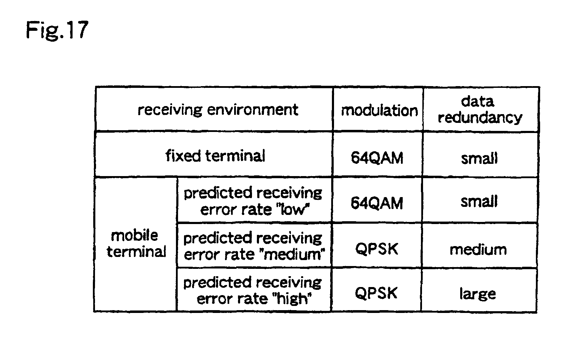

Then, the control means 5 performs switching of the modulation and data redundancy according to a transmission quality management table shown in figure 17.

The table shown in figure 17 differs from that shown in figure 11 only in that predicted receiving error rates have replaced the receiving error rates. Specifically, when transmitting the requested video information to the mobile terminal, the control means 5 predicts the receiving error in the mobile terminal 2 based on the updated map and the received car location, and performs switching to modulation and data redundancy corresponding to the predicted error rate contained in the table shown in figure 17. Operations of the central station 1 and the mobile terminal 2 thereafter are identical to those shown in the first example.

Thus, in accordance with the fourth example, the mobile terminal 2 detects the receiving error rate in distribution of the video information, and transmits this and the car location as the receiving environment information to the central station 1 when it makes a request, while the central station 1 stores the transmitted car location and receiving error rate as the map showing the receiving environment of the TV broadcasting area, and when the request is made from the mobile station 2, performs switching of the method for ensuring the transmission quality relating to the code error in distribution of the video information to the mobile terminal 2, according to the stored map. Since the receiving error rate in the mobile terminal 2 when the request is made can be predicted according to the map, it is possible to select the method for ensuring the transmission quality relating to the code error according to the predicted error rate and thereby reliably ensure the transmission quality relating to of the code error of the video information to be distributed to the mobile terminal 2.

Embodiment 1.

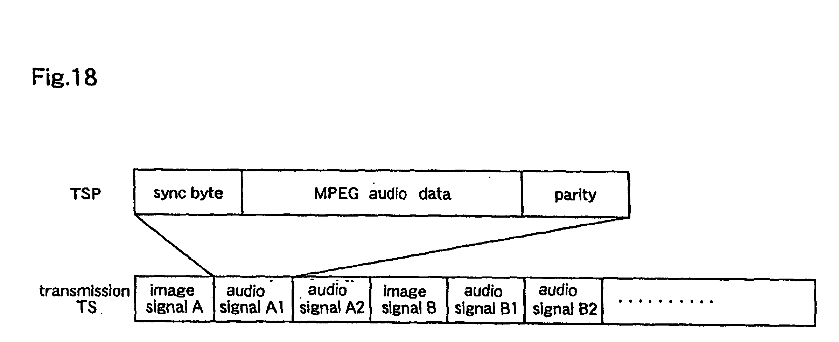

Figure 18 is a diagram showing a structure of a transmission transport stream (TS) transmitted by a digital video signal transmission apparatus according to a first embodiment of the invention.

As shown in figure 18, the transmission TS comprises multiplexed frames composed of transport stream packets (TSP) and has a periodical structure like an image signal A, audio signals A1 and A2 corresponding to an image of the image signal A, an image signal B, and audio signals B1 and B2 corresponding to an image of the image signal B.

The audio signals A1 and B1 are modulated according to modulation which provides a large transmission capacity in which mass storage capacity signals can be transmitted and the audio signals A2 and 82 are modulated according to modulation which provides resistibility to a transmission error such as multi-pass interference.

In TV broadcasting, an audio signal is modulated by 64QAM (quadrature amplitude modulation) or 16QAM which provides a large transmission capacity and transmitted like the image signal with a bandwidth 20kHz. In a car stereo, since this performs mobile object receiving, the audio signal is commonly received with a bandwidth 3kHz, because high-pitched tone is difficult to hear and low-pitched tone is easy to hear. In addition, the transmission error such as the multi-pass interference tends to occur in mobile objects. Hence, as the audio signal, two types of signals of the same content, i.e., a fixed receiving audio signal modulated by 64QAM or 16QAM which provides a large transmission capacity and a mobile object receiving audio signal modulated by DQPSK (differential quadrature phase shift keying) or QPSK (quadrature phase sift key) which provides resistibility to the multi-pass interference, are transmitted simultaneously, and a transmitter 7 transmits a fixed receiving wave for domestic use. Thereby, 20kHz is ensured at maximum. Since the signal according to the DQPSK or QPSK requires transmission time 4 times as long as that of the signal according to the 64QAM or the 16QAM, the former is transmitted with 3-4kHz and the latter is transmitted with 20kHz so that they are transmitted in almost the same time.

While the transmission TS comprises the two image signals and the two types of audio signals corresponding to each of the images of the image signals, the TS is not limited to this. For instance, the TS may comprise a plurality of image signals which can be transmitted in the TS and the fixed receiving audio signal and the mobile object receiving audio signal corresponding to each of plural images of the plural image signals.

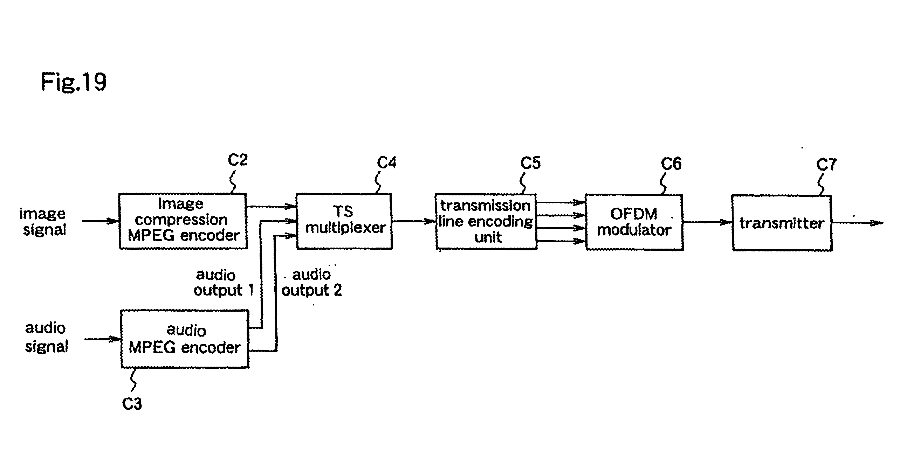

Figure 19 is a block diagram showing a digital video signal transmission apparatus of the first embodiment.

In figure 19, reference numeral C2 denotes an MPEG encoder for image compression which receives an image signal externally and compresses the image signal into an image signal adapted to high definition (HD) broadcasting or standard definition (SD) broadcasting. Reference numeral C3 denotes a speech MPEG encoder which receives an audio signal externally, compresses the audio signal into an audio signal adapted to the HD broadcasting or the SD broadcasting, and outputs the audio signal from audio outputs 1 and 2. Reference numeral C4 denotes a TS multiplexer which divides the image signal A output from the MPPEG encoder C2 and the audio signals A1 and A2 output from the MPEG encoder C3 into separate TSPs, multiplexes the TSPs into the TS shown in figure 18, and outputs the TS. Reference numeral C5 denotes a transmission line encoding unit which performs error protection by correcting errors in 16-byte parity by a Reed-Solomon code for each of the TSPs composing the TS, and then hierarchizes the TSPs, and outputs a signal which has been subjected to energy diffusion, byte-interleaving, and convolutional encoding. Reference numeral C6 denotes an OFDM (orthogonal frequency division multiplexing) modulator which performs carrier modulation for each of layers in a hierarchy of the hierarchized TSPs, and then performs layer composition and time-and-frequency interleaving, to form OFDM frames. Reference numeral C7 denotes a transmitter which transmits a video signal in which OFDM segments comprising the OFDM frames from the OFDM modulator C6 have been subjected to OFDM, through ground wave digital broadcasting. Briefly, the video signal transmission apparatus of the first embodiment comprises the MPEG encoder C2 for image compression, the audio MPEG encoder C3, the TS multiplexer C4, the transmission line encoding unit C5, the OFDM modulator C6, and the transmitter C7.

While the video signal transmission apparatus shown in figure 19 includes the MPEG encoder C2 for image compression and the audio MPEG encoder C3 for outputting one image signal and two types of audio signals corresponding to an image of the image signal, in order to output plural image signals and two types of audio signals corresponding to each of plural images of the plural image signals, it is required that the apparatus include plural MPEG encoders C2 and plural audio encoders C3.

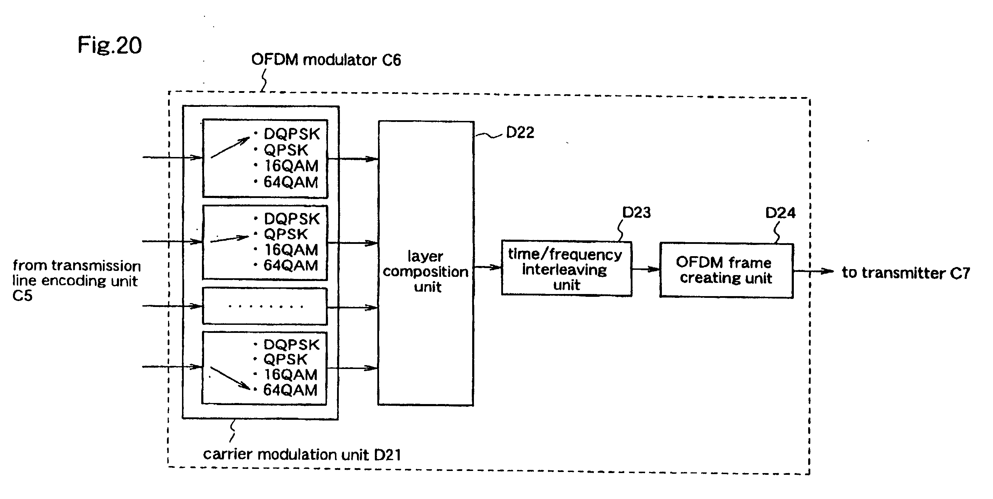

Figure 20 is a block diagram showing a detailed structure of the OFDM modulator C6 shown in figure 19.

In figure 20, the same reference numerals as those shown in figure 19 denote the same or the corresponding parts. Reference numeral D21 denotes a carrier modulating unit which performs carrier modulation for each of the layers of the hierarchized TSPs output from the transmission line encoding unit C5. D22 denotes a layer composition unit which performs layer composition for signals of the respective layers modulated by the carrier modulating unit D21 and outputs the resulting signal. D23 denotes a time/frequency interleaving unit which subjects the signal from the layer composition unit D22 to time and frequency interleaving. D24 denotes an OFDM frame creating unit which performs OFDM to create the OFDM frames, and outputs the OFDM frames.

A description will now be given of operation of so constructed digital video signal transmission apparatus of the first embodiment with reference to figures 18-20.

The MPEG encoder C2 receives the image signal externally as an input, compresses the image signal into the image signal A in a way adapted to the high definition (HD) broadcasting or the standard definition (SD) broadcasting, and outputs the image signal A. Simultaneously, the audio MPEG encoder C3 receives the audio signal corresponding to the image signal externally as an input, compresses the speech signal into the audio signals A1 and A2, and outputs the audio signals A1 and A2 from the audio outputs 1 and 2.

The TS multiplexer C4 separates the image signal A from the MPEG encoder C2 and the audio signals A1 and A2 from the MPEG encoder C3 into separate TPSs and multiplexes the TPSs into the transmission TS shown in figure 18.

While the MPEG encoder C3 outputs the audio signals A1 and A2 through the audio outputs 1 and 2 to the TS multiplexer C4 temporally in parallel, the audio signals A1 and A2 may be output temporally in series through one output. Besides, since the audio signals A1 and A2 are the same when they are output from the MPEG encoder C3, two audio signals to be output through one output may be numbered serially, and the TS multiplexer C4 may multiplex the two audio signals according to the corresponding numbers. Here, a frequency bandwidth is determined and coding is performed.

The transmission line encoding unit C5 receives the transmission TS from the TS multiplexer and performs error protection by correcting errors in 16-byte parity by the Reed-Solomon code for each of the TPSs composing the TS, and then hierarchizes the TSPs, and outputs the signal which has been subjected to energy diffusion, byte-interleaving, and convolutional encoding. The transmitter C7 transmits the fixed receiving wave for domestic use. So, the TSPs of the image signal A and the audio signal A1 are placed in higher layers in the hierarchy because they are modulated by modulation providing a large transmission capacity, while the TSP of the audio signal A2 is placed in a lower layer in the hierarchy because it is modulated by modulation providing resistibility to the multi-pass interference.

The carrier modulating unit D21 included in the OFDM modulator C6 performs carrier modulation for each of the layers of the hierarchized TSPs from the transmission line encoding unit C5 and outputs the resulting TPSs. For instance, the TPSs of the image signal A and the audio signal A1 in higher layers are modulated by the 64QAM or the 16QAM which provides a large transmission capacity, and the TPS of the audio signal A2 in the lower layer is modulated by-the QPSK or the DQPSK which provides resistibility to multi-pass interference.

The layer composition unit D22 receives the signals in the respective layers modulated by the carrier modulating unit D21, performs layer composition for these signals, and outputs a hierarchical composite signal.

The time/frequency interleaving unit D23 receives the hierarchical composite signal from the layer composition unit D22 as an input and performs time/frequency interleaving for the signal.

The OFDM frame creating unit D24 creates the OFDM frames from the interleaved signals output from the time/frequency interleaving unit D23, and outputs the OFDM frames.

The transmitter C7 performs OFDM to carrier of one or a plurality of OFDM segments (OFDM frames) which have been modulated by DQPSK, 64QAM, and the like, and transmits the resulting OFDM segment. At this time, to the OFDM segment (carrier), a control signal (including a modulation mode signal) is added. A plurality of the OFDM segments to which control signals have been added are combined and transmitted, and at a receiving end, a transmission parameter such as "modulation" or "error correction" is independently estimated.

The mobile object receiving audio signal is thus multiplexed and transmitted as measures against the multi-pass interference. Hence, when receiving this audio signal, charge is requested to the user as system charge. Preferably, accounting is performed according to how many times this audio signal is used.

Accordingly, the digital video transmission apparatus shown in figure 19 further comprises an accounting information addition unit 29 for adding an accounting signal to the mobile object receiving audio signal (audio signal A2 or B2), thereby performing accounting depending upon how the audio signal is used at the receiving end.

The accounting information addition unit 29 adds accounting information to a data portion of the audio signal A2 output from the audio MPEG encoder C3. This makes a data length of the audio signal A2 different from that of the audio signal A1. Therefore, if the audio signal A1 is switched to the audio signal A2 at the receiving end, the audio signal A2 cannot be received. As a solution to this, the accounting information addition unit 29 adds a NULL signal to the audio signal A1 to make it have a data length equal to that of the audio signal A2 to which the accounting information has been added.

Operation of components other than the accounting information addition unit 29 is identical to that of the digital video signal transmission apparatus shown in figure 19.

The accounting information may be included in the control signal. As described above, the audio signals A1 and A2 correspond to the segments and the control signal for controlling a mode (carrier modulation, coding efficiency for internal codes, time interleaving length, and the like) is added to each data segment, and therefore a signal adapted to carrier modulation of the control signal may be used as the accounting signal. It is preferable to add the accounting information to the data portion in order to reliably use the accounting information, because the control signal is sometimes used independently of the audio signal A1 or A2 when demodulated into a receiving TS. Hence, the accounting information may be added to both of the data portion and the control signal to obtain the accounting information more reliably.

Thus, in accordance with the digital video signal transmission apparatus of the first embodiment, the audio encoder compresses the audio signal and outputs the two audio signals from the two audio outputs, the OFDM modulator modulates one of the audio signals by modulation which provides a large transmission capacity to make the fixed receiving audio signal and the other signal by modulation which provides resistibility to the transmission errors to make the mobile object receiving audio signal, which are subjected to time division multiplexing and transmitted. At the receiving end, the fixed receiving audio signal is used in a preferable receiving state, while if the transmission error such as the multi-pass interference occurs, the mobile object receiving audio signal is used, thereby reproducing the digital audio signal correctly.

In addition, since the frequency bandwidth of the mobile object receiving audio signal is made narrower than that of the fixed receiving audio signal, not only the mobile object receiving audio signal is resistive to the transmission error but its quality is ensured without affecting hearing.

Besides, since the frequency bandwidth of the mobile object receiving audio signal is 3-4kHz and the frequency bandwidth of the fixed receiving audio signal is 20kHz, these signals can be transmitted in almost the same time.

Further, since the accounting information addition unit adds the accounting information to the mobile object receiving audio signal of the two signals output from the audio encoder, at the receiving end, the accounting information is used to perform accounting to usage of this digital video signal transmission system depending upon how the user uses the mobile object receiving audio signal.

Embodiment 2.

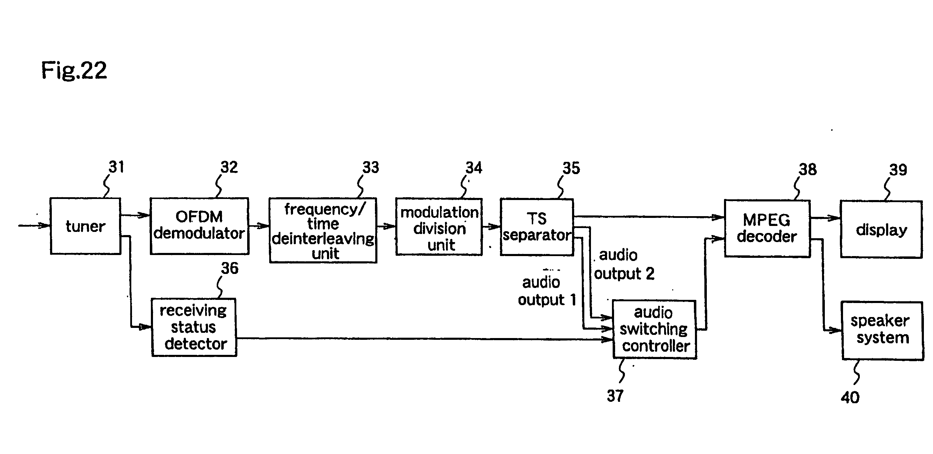

Figure 22 is a block diagram showing a digital video signal receiving apparatus according to a second embodiment of the present invention.

In figure 22 reference numeral 31 denotes a tuner which receives the video signal transmitted from the digital video signal transmission apparatus of the first embodiment as an input, converts the video signal into an intermediate-frequency signal and outputs the intermediate-frequency signal. 32 denotes an OFDM demodulator which demodulates the OFDM frames from the intermediate-frequency signal from the tuner 31 and separates.the signals of the TS and the modulation mode signals of the intermediate-frequency signal. 33 denotes a frequency/time deinterleaving unit which performs time and frequency deinterleaving for the TS signals from the OFDM demodulator 32. 34 denotes a modulation division unit which subjects the deinterleaved signals from the frequency/time deinterleaving unit 33 to modulation division according to the modulation mode signals, demaps the modulation-divided signals in a way adapted to respective modulation, and then performs modulation composition for the demapped signals. 35 denotes a TS separator which performs Viterbi decoding, byte-deinterleaving, and energy diffusion to reproduce the TS. Here, for each of the TSPs. composing the TS, bit errors are corrected in 16-byte parity by a Reed-Solomon code, and the resulting signal is divided into the image signal A, the audio signal A1, and the audio signal A2, and output. 36 denotes a receiving status detector which detects a multi-pass status or a receiving level of the intermediate-frequency signal output from the tuner 31, and outputs a switching signal when a detected value is lower than a predetermined value. 37 denotes an audio switching controller which usually receives the audio signal A1 from the audio output 1. When the switching signal is output from the receiving status detector 36, according to the switching signal, the switching controller 37 is adapted to switch an input from the TS separator 35 from the audio output 1 to the audio output 2 to receive the audio signal A2. 38 denotes an MPEG decoder which decodes the image signal from the Ts separator 35 and the audio signal selected by the audio switching controller 37 and outputs the resulting decoded signals separately. 39 denotes a display which displays an image decoded by the MPEG decoder 38. 40 denotes a speaker system which plays back audio decoded by the MPEG decoder 38.

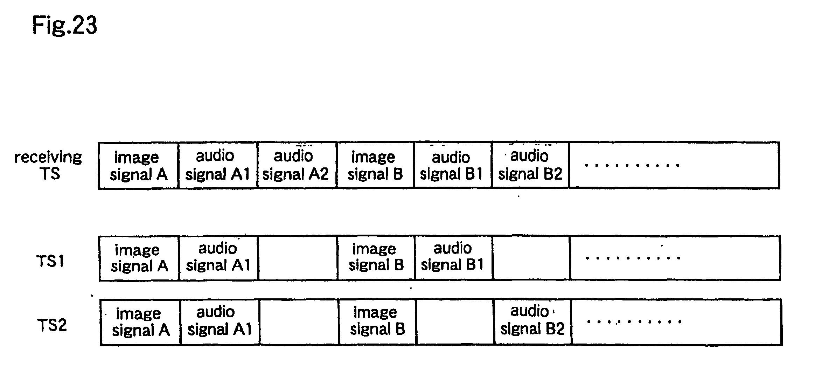

A description will be given of so constructed digital video signal receiving apparatus according to the second embodiment with reference to figures 22 and 23.

The tuner 31 receives the video signal transmitted from the digital video signal transmission apparatus of the first embodiment as an input, converts the video signal into the intermediate-frequency signal and outputs the intermediate-frequency signal.

The OFDM demodulator 32 demodulates the OFDM frames from the intermediate-frequency signal output from the tuner 31 and separates the signals of the TS and the controls signals (modulation mode signals) of the intermediate-frequency signal.

The frequency/time deinterleaving unit 33 performs time and frequency deinterleaving for the TS signals from the OFDM demodulator 32 according to the control signals output from the OFDM demodulator 32.

The modulation division unit 34 subjects the deinterleaved signals from the frequency/time deinterleaving unit 33 to modulation division according to the modulation mode signals, demaps the modulation-divided signals in a way adapted to respective modulation (QPSK, 16QAM, 64QAM), and then performs modulation composition for the demapped signals.

TS separator 35 performs Viterbi decoding, byte-deinterleaving, and energy diffusion to reproduce the TS. Specifically, the signal processed for each of the layers is stored in the corresponding buffer for each layer. Each buffer is checked whether or not data (TSP) is stored therein, and when data is stored therein, the corresponding buffer is sent to an external encoder (Reed-Solomon decoding). When the TSPs are stored in the buffers for two or more layers, the TSP stored in the buffer for the layer of a smaller segment number (TSP stored previously) is selected and extracted. On the other hand, when there is no TSP, a NULL packet is transmitted. For each of the TSPs of so reproduced TS, the bit errors are corrected in 16-byte parity by the Reed-Solomon code, and the resulting signal is divided into the image signal A, the audio signal A1, and the audio signal A2, and output.

The receiving status detector 36 detects the multi-pass status or the receiving level of the intermediate-frequency signal, and outputs the switching signal when the detected value is lower than the predetermined value.

The audio switching controller 37 usually receives the audio signal A1 from the audio output 1. When the switching signal is output from the receiving status detector 36, according to the switching signal, the switching controller 37 switches the input from the TS separator 35 from the audio output 1 to the audio output 2 to receive the audio signal A2.

The TS separator 35 reproduces a receiving TS shown in figure 6. When the receiving status of the video signal is preferable, the audio switching controller 37 selects the output from the audio output 1 to be adapted to the HD broadcasting or the SD broadcasting, and the TS separator 35 outputs the audio signal A1 or the audio signal B1 from the audio output 1, whereby a part of a TS1 shown in figure 6 is output. On the other hand, when receiving the image signal B in a worse condition, the audio switching controller 37 selects the audio output 2 for outputting the audio signal modulated by the DQPSK or the QPSK which provides resistibility to the multi-pass interference, and therefore the TS separator 35 outputs the audio signal B2 from the audio output 2, whereby a part of a TS2 shown in figure 6 is output.

The MPEG decoder 38 decodes the image signal from the TS separator 35 and the audio signal selected by the audio switching controller 37 and outputs the resulting decoded signals separately.

The display 39 displays the image decoded by the MPEG decoder 38.

The speaker system 40 plays back audio decoded by the MPEG decoder 38.

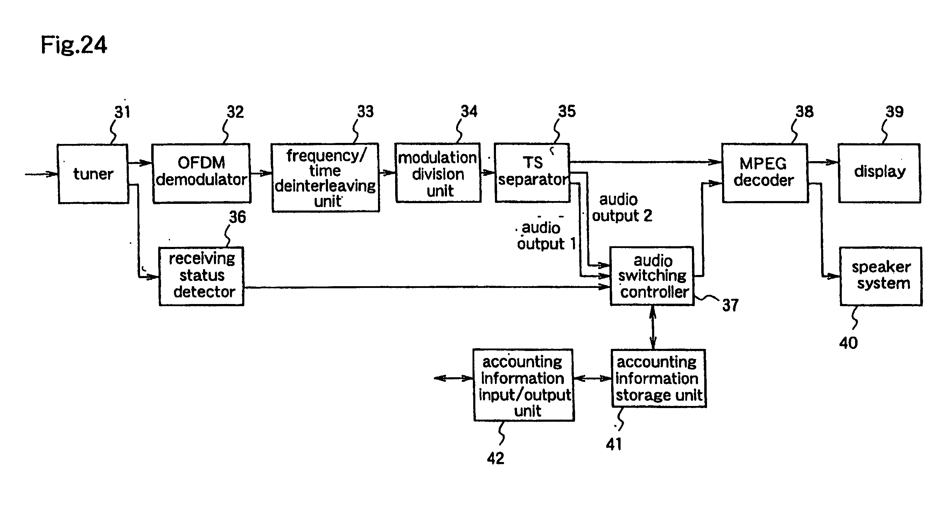

Figure 24 is a block diagram showing another digital video signal receiving apparatus according to a second embodiment of the present invention.

In the figure, the same reference numerals as those shown in figure 22 denote the same or the corresponding parts. Reference numeral 41 denotes an accounting information storage unit which stores the accounting information added to the mobile object receiving audio signal. 42 denotes an accounting information input/output unit which reads the accounting information stored in the accounting information storage unit 41.

A description will be given of operation of the above digital video signal receiving apparatus which is different from that shown in figure 22 with reference to figure 24.

The audio switching controller 37, when it receives the audio signal A1 to which the NULL information has been added, from the audio output 1, removes the NULL information from the audio signal A1 and outputs the resulting signal. When it receives the switching signal from the receiving status detector 36, the controller 37 receives the audio signal A2 to which the accounting information has been added, from the audio output 2, separates the accounting information from the audio signal A2. and stores the accounting information in the accounting information storage unit 41. The accounting information stored in the storage unit 41 is output to the display 39 and displayed thereon as necessary to show how the user uses the mobile object receiving signal (audio signal A2). In this case, upper limit amount of money of the stored accounting information may be set in the accounting information storage unit 41, and when the upper limit amount is almost reached, an image for instructing the user to settle accounts may be displayed on the display 39.

The accounting information input/output unit 42 reads the accounting information stored in the accounting information storage unit 41 and performs settlement of accounts by deducting the corresponding amount of money from a prepaid card and the like. The accounting information input/output unit 42 uplinks a broadcasting station and the like by a portable telephone or Road Automobile Communication System at regular time intervals to inform the user how he/she uses the mobile object receiving signal based on the accounting information. The broadcasting station also understands how the user uses the signal and utilizes it to provide a service.

Thus, in accordance with the digital video signal receiving apparatus of the third embodiment, the video signal in which the image signal and the fixed receiving audio signal and the mobile object receiving audio signal of the same content corresponding to the image signal are multiplexed is received, the receiving status detector detects the receiving status, and when the detected value is lower than the predetermined value, it outputs the switching signal to the audio switching controller, which performs switching from the fixed receiving audio signal to the mobile object receiving audio signal and outputs the mobile object receiving audio signal to the decoder. Therefore, in the preferable receiving status, the fixed receiving audio signal is reproduced and if the transmission error such as the multi-pass interference might occur, the mobile object receiving audio signal is reproduced correctly.

In addition, the accounting information added to the mobile object receiving audio signal input by the audio signal switching controller is stored in the accounting information storage unit, and read by the accounting information input/output unit, and settlement of accounts is performed by the same. Hence, depending upon how the user uses the mobile object receiving audio signal, accounting is performed to usage of the digital video signal transmission system.

**Claims**

1.  A digital video signal transmission apparatus for transmitting a digital video signal in which a digital image signal and a digital audio signal corresponding to the digital image signal which are externally input are multiplexed, said apparatus comprising:

    modulation means (C6) which modulates the digital audio signal by first modulation to provide a fixed receiving digital audio signal and modulates the digital audio signal by second modulation which provides higher resistibility to a transmission error than the first modulation, to provide a mobile object receiving digital audio signal; and
    a transmitter (C7) which transmits a digital video signal in which the digital image signal, the fixed receiving digital audio signal, and the mobile object receiving digital audio signal are multiplexed.

2.  The digital video signal transmission apparatus according to claim 1, said apparatus comprising:

    image encoding means (C2) which compresses the digital image signal externally input;
    audio encoding means (C3) which compresses the digital audio signal externally input into a compressed digital audio signal and outputs the compressed digital audio signal as a fixed receiving digital audio signal and a mobile object receiving digital audio signal;
    transport stream multiplexing means (C4) which packetizes the digital image signal from the image encoding means (C2), the fixed receiving digital audio signal and the mobile object receiving digital audio signal from the audio encoding means (C3) and multiplexes the resulting packets into a transport stream; and
    transmission line encoding means (C5) which performs error protection for each of the packets composing the transport stream multiplexed by the transport stream multiplexing means (C4) and hierarchizes the packets in such a way that packets of the digital image signal and the fixed receiving digital audio signal are positioned in higher layers in a hierarchy and a packet of the mobile object receiving digital audio signal is positioned in a lower layer in the hierarchy,
    wherein
    said modulation means (C6) performs orthogonal frequency division multiplexing modulation in which the packet of the higher layer is modulated by the first modulation to provide a modulated fixed receiving digital audio signal and the packet of the lower layer is modulated by second modulation which provides higher resistibility to a transmission error than the first modulation to provide a modulated mobile object receiving digital audio signal, among the hierarchized packets from the transmission line encoding means (C5), and
    said transmitter (C7) transmits a digital video signal in which a digital image signal, the fixed receiving digital audio signal, and the mobile object receiving digital audio signal which are modulated by the modulation means (C6) are time-division multiplexed.

3. The digital video signal transmission apparatus according to claim 1, wherein a frequency bandwidth of the mobile object receiving digital audio signal is made narrower than a frequency bandwidth of the fixed receiving digital audio signal.

4. The digital video signal transmission apparatus according to claim 3, wherein the frequency bandwidth of the mobile object receiving digital audio signal is set to 3-4 kHz and the frequency bandwidth of the fixed receiving digital audio signal is set to 20 kHz.

5. The digital video signal transmission apparatus according to claim 1, wherein accounting information is added to the mobile object receiving digital audio signal.

6. A digital video signal receiving method which receives a digital video signal in which a digital image signal and a digital audio signal corresponding to the digital image signal are multiplexed as an input, and reproduces the digital image signal and the digital audio signal from the received digital video signal, wherein
the digital video signal comprises a fixed receiving digital audio signal obtained by modulating the digital audio signal according to first modulation and a mobile object receiving digital audio signal obtained by modulating the digital audio signal according to second modulation which provides higher resistibility to a transmission error than the first modulation and the digital image signal, the fixed receiving digital audio signal, the mobile object receiving digital audio signal, and the digital image signal are multiplexed, said method comprising:

   a demodulation step for receiving and demodulating the digital image signal, the fixed receiving digital audio signal, and the mobile object receiving digital audio signal;
   a receiving status detecting step for detecting a signal level of the received digital video signal and outputting a control signal when the detected value is lower than a preset vale; and
   a audio switching control step for receiving the fixed receiving digital audio signal from a fixed receiving audio output as an input and outputting the fixed receiving digital audio signal, and when the signal level of the received digital video signal is lower than the preset value, performing switching to a mobile object receiving audio output to receive the mobile object receiving digital audio signal as an input and outputting the mobile object receiving digital audio signal.

7. The digital video signal receiving method according to claim 6, wherein accounting information is added to the mobile object receiving digital audio signal.

8. The digital video signal receiving method according to claim 7, wherein
said audio switching control step is for further extracting and storing the accounting information, said method further including:

   an accounting information input/output step for performing accounting to usage of the mobile object receiving digital audio signal according to the stored accounting information.

9. A digital video signal receiving apparatus which receives a digital video signal in which a digital image signal and a digital audio signal corresponding to the digital image signal are multiplexed as an input, and reproduces the digital image signal and the digital audio signal from the received digital video signal, wherein
the digital video signal comprises a fixed receiving digital audio signal obtained by modulating the digital audio signal according to first modulation and a mobile object receiving digital audio signal obtained by modulating the digital audio signal according to second modulation which provides higher resistibility to a transmission error than the first modulation, and the digital image signal, the fixed receiving digital audio signal, the mobile object receiving digital audio signal and the digital image signal are multiplexed, said apparatus comprising:

   a tuner (31) which receives the digital video signal;
   orthogonal frequency division multiplexing demodulation means (32) which demodulates the digital image signal, the fixed receiving digital audio signal, and the mobile object receiving digital audio signal;
   modulation division means (34) which subjects demodulated signals from the orthogonal frequency division multiplexing demodulation means (32) to modulation division, demapping in ways adapted to respective modulation methods, and then modulation composition;
   transport stream separating means (35) which reproduces a transport stream from modulation-composited signals from the modulation division means (34), corrects errors for each of packets composing the transport stream, separates the packets into the digital image signal, the fixed receiving digital audio signal and the mobile object receiving digital audio signal and outputs the digital image signal, the fixed audio receiving digital audio signal and the mobile object receiving digital audio signal, from a video output, a fixed receiving audio output, and a mobile object receiving audio output, respectively;

a receiving status detection means (36) which detects a signal level of the received digital video signal and outputs a control signal when the detected value is lower than a preset vale;

an audio switching control means (37) which receives the fixed receiving digital audio signal from the fixed receiving audio output as an input and outputs the fixed receiving digital audio signal and when receiving the control signal from the receiving status detection means, performs switching to the mobile object receiving audio output to receive the mobile object receiving digital audio signal as an input and outputs the mobile object receiving digital audio signal;

a decoder (38) which receives and decodes the digital image signal from the transport stream separating means (35), and either the fixed receiving digital audio signal or the mobile object receiving digital audio signal output from the audio switching control means;

a display (39) which displays a decoded image; and

a speaker (40) system which plays back decoded audio.

10. The digital video signal receiving apparatus according to claim 9, wherein accounting information is added to the mobile object receiving digital audio signal.

11. The digital video signal receiving apparatus according to claim 10, wherein

said audio switching control step receives the fixed receiving digital audio signal from a fixed receiving audio output as an input and outputs the fixed receiving audio, and when the signal level of the received digital video signal is lower than the preset value, performs switching to the mobile object receiving digital audio output to receive the mobile object receiving digital audio signal as an input, extracts and stores the accounting information, and outputs the mobile object receiving digital audio signal, said apparatus further comprising:

accounting information input/output means which performs accounting to usage of the mobile object receiving digital audio signal according to the stored accounting information.

## Patentansprüche

1. Digitalvideosignal-Übertragungsgerät zum Übertragen eines digitalen Videosignals, in dem ein digitales Bildsignal und ein dem digitalen Bildsignal entsprechendes digitales Audiosignal, welche extern eingegeben werden, gemultiplext sind, wobei das Gerät umfasst:

eine Modulationseinrichtung (C6), die das digitale Audiosignal durch eine erste Modulation moduliert, um ein Festempfang-Digitalaudiosignal bereitzustellen, und das digitale Audiosignal durch eine zweite Modulation moduliert, die eine höhere Widerstandsfähigkeit gegenüber einem Übertragungsfehler als die erste Modulation aufweist, um ein Mobilobjektempfang-Digitalaudiosignal bereitzustellen, und

einen Sender (C7), der ein digitales Videosignal überträgt, in dem das digitale Bildsignal, das Festempfang-Digitalaudiosignal und das Mobilobjektempfang-Digitalaudiosignal gemultiplext sind.

2. Digitalvideosignal-Übertragungsgerät gemäß Anspruch 1, wobei das Gerät umfasst:

eine Bildcodiereinrichtung (C2), die das extern eingegebene digitale Bildsignal komprimiert,

eine Audiocodiereinrichtung (C3), die das extern eingegebene digitale Audiosignal in ein komprimiertes digitales Audiosignal komprimiert und das komprimierte digitale Audiosignal als ein Festempfang-Digitalaudiosignal und ein Mobilobjektempfang-Digitalaudiosignal ausgibt,

eine Transportstrom-Multiplexeinrichtung (C4), die das digitale Bildsignal von der Bildcodiereinrichtung (C2), das Festempfang-Digitalaudiosignal und Mobilobjektempfang-Digitalaudiosignal von der Audiocodiereinrichtung (C3) paketiert und die resultierenden Pakete in einem Transportstrom multiplext, und

eine Übertragungsleitung-Codiereinrichtung (C5), die einen Fehlerschutz für jedes der Pakete durchführt, die den von der Transportstrom-Multiplexeinrichtung (C4) gemultiplexten Transportstrom ausbilden, und die Pa-

EP 0 954 178 B1

kete derart hierarchisch ordnet, dass die Pakete des digitalen Bildsignals und des Festempfang-Digitalaudiosignals in höheren Ebenen einer Hierarchie positioniert sind und ein Paket des Mobilobjektempfang-Digitalaudiosignals in einer niedrigen Ebene einer Hierarchie positioniert sind, wobei

die Modulationseinrichtung (C6) eine Orthogonalfrequenzdivisionmultiplexmodulations durchführt, in der das Paket der höheren Ebene durch die erste Modulation moduliert wird, um ein moduliertes Festempfang-Digitalaudiosignal zu erhalten, und das Paket der niedrigeren Ebene durch eine zweite Modulation moduliert wird, die eine höhere Widerstandsfähigkeit gegenüber einem Übertragungsfehler als die erste Modulation bereitstellt, um ein moduliertes Mobilobjektempfang-Digltalaudlosignal bereitzustellen, wobei die Pakete der höheren Ebene und niedrigeren Ebene von der Übertragungsleitung-Codiereinrichtung (C5) hierarchisch geordnete Pakete sind, und

der Sender (C7) ein digitales Videosignal überträgt, in dem ein digitales Bildsignal, das Festempfang-Digitalaudiosignal und das Mobilobjektempfang-Digitalaudiosignal, die von der Modulationseinrichtung (C6) moduliert sind, zeitgemultiplext werden.

3. Digitalvideosignal-Übertragungsgerät gemäß Anspruch 1, wobei eine Frequenzbandbreite des Mobilobjektempfang-Digitalaudiosignal kleiner als eine Frequenzbandbreite des Festempfang-Digitalaudiosignals gemacht wird.

4. Digitalvldeosignal-Übertrangungsgerät gemäß Anspruch 3, wobei die Frequenzbandbreite des Mobilobjektempfang-Digitalaudiosignal auf 3 bis 4 kH eingestellt wird und die Frequenzbandbreite des Festempfang-Digitalaudiosignals auf 20 kH eingestellt ist.

5. Digitalvideosignal-Übertragungsgerät gemäß Anspruch 1, wobei Annahmeinformationen zu dem Mobiiobjektempfang-Digitalaudiosignal hinzugefügt sind.

6. Digitalvideosignal-Empfangsverfahren, welches ein digitales Videosignal als Eingabe empfängt, in dem ein digitales Bildsignal und ein dem digitalen Bildsignal entsprechendes Audiosignal gemultiplext werden, und das digitale Bildsignal und das digitale Audiosignal von dem empfangenen digitalen Videosignal reproduziert, wobei das digitale Videosignal ein Festempfang-Digitalaudlosignal aufweist, welches durch Modulieren des digitalen Audiosignals gemäß einer ersten Modulation erhalten wird, und ein Mobilobjektempfang-Digitalaudiosignal aufweist, welches durch Modulieren des digitalen Audiosignals gemäß einer zweiten Modulation erhalten wird, die eine höhere Widerstragsfähigkeit gegenüber einem Übertragungsfehler als die erste Modulation aufweist, und das digitale Bildsignal, das Festempfang-Digltalaudiosignal, das Mobilobjektempfang-Digitalaudiosignal und das digitale Bildsignal gemultiplext werden, wobei das Verfahren die Schritte umfasst:

einen Demodulationsschritt zum Empfangen und Demodulieren des digitalen Bildsignals, des Festempfang-Digitalaudiosignals und des Mobllobjektempfang-Digltalaudiosignals,

einen Empfangsstatus-Erfassungsschritt zum Erfassen eines Signalpegels des empfangenen digitalen Videosignals und Ausgeben eines Steuersignals, wenn der erfasste Wert kleiner als ein vorbestimmter Wert ist, und

einen Audioschalter-Steuerschritt zum Empfangen des Festempfang-Digitalaudiosignals von einer Festempfang-Audioausgabe als Eingabe und zum Ausgeben des Festempfang-Digitalaudiosignals, und, wenn der Signalpegel des empfangenen digitalen Videosignals kleiner als ein vorbestimmter Wert ist, zum Durchführen von Schalten zu einer Mobilobjektempfang-Audioausgabe, um das Mobilobjektempfang-Digitalaudiosignal als Eingabe zu empfangen und das Mobilobjektempfang-Digitalaudiosignal auszugeben.

7. Digitalvideosignal-Empfangsverfahren gemäß Anspruch 6, wobei Annahmeinformationen zu dem Mobilobjektempfang-Digitalaudiosignal hinzugefügt werden.

8. Digitalvideosignals-Empfangsverfahren gemäß Anspruch 7, wobei der Audioschalter-Steuerschritt femer einem Extrahieren und Speichern der Annahmeinformationen dient, wobei das Verfahren ferner umfasst:

einen Annahmeinformationseingangs/ausgangsschritt zum Durchführen einer Annahme zum Verwenden des Mobilobjektempfang-Digitalaudiosignals gemäß der gespeicherten Annahmeinformationen.

9. Digitalvideosignal-Empfangsgerät, welches ein digitales Videosignal empfängt, in dem ein digitales Bildsignal und ein dem digitalen Bildsignal entsprechendes, digitales Audiosignal als Eingabe gemultiplext sind, und welches das digitale Bildsignal und das digitale Audiosignal von dem empfangenen digitalen Videosignal wiedergibt, wobei das digitale Videosignal ein Festempfang-Digitalaudiosignal aufweist, welches durch Modulieren des digitalen Audiosignals gemäß einer ersten Modulation erhalten wird, und Mobilobjektempfang-Digitalaudiosignal aufweist, welches durch Modulieren des digitalen Audiosignals gemäß einer zweiten Modulation erhalten wird, die eine höhere Widerstandsfähigkeit gegenüber einem Übertragungsfehler als die erste Modulation aufweist, und das digitale Bildsignal, das Festempfang-Digltalaudiosignal, das Mobilobjektempfang-Digitalaudiosignal und das digitale Bildsignal gemultiplext werden, wobei das Gerät umfasst:

einen Empfänger (31), der das digitale Videosignal empfängt,

eine Orthogonalfrequenzmultlpiex-Demodulationseinrichtung (32), die das digitale Bildsignal, das Festempfang-Digitalaudiosignal und das Mobilobjektempfang-Digitalaudiosignal demoduliert,

eine Modulationsdivisionseinrichtung (34), die demodulierte Signale von der Orthognalfrequenzmultiplex-Demodulationseinrichtung (32) einer Modulationsdivision unterzieht, die auf eine Weise entschlüsselt, die an ein entsprechendes Modulationsverfahren angepasst ist, und dann eine Modulationskomposition durchführt,

Übertragungsstrom-Trenneinichtung (39), die einen Übertragungsstrom vom Modulationskompositionssignal von der Modulationsdivisionseinrichtung (34) wiedergibt, Fehler für jedes Paket, welches den Übertragungsstrom bildet, korrigiert, die Pakete in die digitalen Bildsignale, das Festempfang-Digitalaudiosignal und das Mobilobjektempfang-Digitalaudiosignal trennt und das digitale Bildsignal, das Festempfang-Digitalaudiosignal und das Mobilobjektempfang-Digitalaudiosignal von einem Videoausgang, einem Festempfang-Audioausgang, und einem Mobileobjektempfang- Audioausgang jeweils ausgibt,

eine Empfangsstatus-Erfassungseinrichtung (36), die einen Signalpegel des empfangenen digitalen Videosignals erfasst und ein Steuersignal ausgibt, wenn der erfasst Wert niedriger als ein vorbestimmter Wert ist,

eine Audioschalter-Steuereinrichtung (37), die das Festempfang-Digitalaudiosignal von dem Festempfang-Audioausgang als Eingang empfängt und Festempfang-Digitalaudiosignal ausgibt und, wenn das Steuersignal von der Empfangsstatus-Erfassungseinrichtung empfangen wird, ein Schalten des Mobilobjektempfang-Audioausgangs durchführt, um das Mobilobjektempfang-Digitalaudiosignal als Eingang zu empfangen und das Mobilobjektempfang-Digitalaudiosignal auszugeben,

ein Decodierer (38), der das digitale Bildsignal von der Übertragungsstrom-Trenneinrichtung (35) und entweder das Festempfang-Digitalaudiosignal oder das Mobilobjektempfang-Digitalaudiosignal, welches von der Audioschaiter-Steuereinrichtung ausgegeben wird, empfängt und decodiert,

eine Anzeige (39), die ein decodiertes Bild anzeigt, und

ein Lautsprecher-System (40), welches decodiertes Audio wiedergibt.

**10.** Digitalvideosignal-Empfangsgerät gemäß Anspruch 9, wobei Annahmeinformationen zu dem Mobilobjektempfang-Digitalaudiosignal hinzugefügt sind.

**11.** Digitalvideosignal-Empfangsgerät gemäß Anspruch 10, wobei der Audioschalter-Steuerschritt das Festempfang-Digitalaudiosignal von einem Festempfang-Audioausgang als Eingang empfängt und das Festempfang-Audio ausgibt, und, wenn der Signalpegel des empfangenen digitalen Videosignals kleiner als ein vorbestimmter Wert ist, ein Schalten des Mobilobjektempfang-Digitalaudioausgangs durchführt, um das Mobilobjektempfang-Digitalsignal als Eingang zu empfangen, Annahmeinformationen extrahiert und speichert und das Mobilobjektempfang-Digitalaudiosignal ausgibt, wobei das Gerät ferner umfasst:

eine Annahmeinformations-Eingangs/Ausgangseinrichtung, die eine Annahme durchführt, um das Mobilobjektempfang-Digitalaudiosignal gemäß der gespeicherten Annahmeinformationen zu verwenden.

**Revendications**

1. Appareil de transmission de signal vidéo numérique destiné à transmettre un signal vidéo numérique dans lequel un signal d'image numérique et un signal audio numérique correspondant au signal d'image numérique qui sont entrés de manière externe sont multiplexés, ledit appareil comprenant :

   un moyen de modulation (C6) qui module le signal audio numérique par une première modulation pour fournir un signal audio numérique de réception fixé et module le signal audio numérique par une seconde modulation qui fournit une résistibilité supérieure à une erreur de transmission que la première modulation, pour fournir un signal audio numérique de réception d'objet mobile ; et

   un émetteur (C7) qui émet un signal vidéo numérique dans lequel le signal d'image numérique, le signal audio numérique de réception fixé, et le signal audio numérique de réception d'objet mobile sont multiplexés.

2. Appareil de transmission de signal vidéo numérique selon la revendication 1, ledit appareil comprenant :

   un moyen de codage d'image (C2) qui compresse le signal d'image numérique entré de manière externe ;

   un moyen de codage audio (C3) qui compresse le signal audio numérique entré de manière externe en un signal audio numérique compressé et sort le signal audio numérique compressé comme signal audio numérique de réception fixé et signal audio numérique de réception d'objet mobile ;

   un moyen de multiplexage de trame de transport (C4) qui met en paquets le signal d'image numérique provenant du moyen de codage d'image (C2), le signal audio numérique de réception fixé et le signal audio numérique de réception d'objet mobile provenant du moyen de codage audio (C3) et multiplexe les paquets résultants en une trame de transport ; et

   un moyen de codage de ligne de transmission (C5) qui effectue une protection d'erreur pour chacun des paquets composant la trame de transport multiplexée par le moyen de multiplexage de trame de transport (C4) et hiérarchise les paquets de manière telle que les paquets du signal d'image numérique et du signal audio numérique de réception fixé sont positionnés dans les couches supérieures dans une hiérarchie et un paquet du signal audio numérique de réception d'objet mobile est positionné dans une couche inférieure de la hiérarchie, dans lequel

   ledit moyen de modulation (C6) effectue une modulation de multiplexage à division de fréquence orthogonale dans laquelle le paquet de la couche supérieure est modulé par la première modulation pour fournir un signal audio numérique de réception fixé modulé et le paquet de la couche inférieure est modulé par une seconde modulation qui fournit une résistibilité supérieure à une erreur de transmission que la première modulation pour fournir un signal audio numérique de réception d'objet mobile modulé parmi les paquets hiérarchisés provenant du moyen de codage de ligne de transmission (C5), et

   ledit émetteur (C7) émet un signal vidéo numérique dans lequel un signal d'image numérique, le signal audio numérique de réception fixé, et le signal audio numérique de réception d'objet mobile qui sont modulés par le moyen de modulation (C6) sont multiplexés avec division de temps.

3. Appareil de transmission de signal vidéo numérique selon la revendication 1, dans lequel une largeur de bande de fréquence du signal audio numérique de réception de l'objet mobile est rendue plus étroite qu'une largeur de bande de fréquence du signal audio numérique de réception fixé.

4. Appareil de transmission de signal vidéo numérique selon la revendication 3, dans lequel la largeur de bande de fréquence du signal audio numérique de réception d'objet mobile est établie de 3 à 4 kHz et la largeur de bande de fréquence du signal audio numérique de réception fixé est établie à 20 kHz.

5. Appareil de transmission de signal vidéo numérique selon la revendication 1, dans lequel une information de comptabilité est ajoutée au signal audio numérique de réception d'objet mobile.

6. Méthode de réception de signal vidéo numérique qui reçoit un signal vidéo numérique dans laquelle un signal d'image numérique et un signal audio numérique correspondant au signal d'image numérique sont multiplexés comme entrée, et reproduit le signal d'image numérique et le signal audio numérique provenant du signal vidéo numérique reçu, dans laquelle

le signal vidéo numérique comprend un signal audio numérique de réception fixé obtenu par modulation du signal audio numérique conformément à la première modulation et un signal audio numérique de réception d'objet mobile obtenu par modulation du signal audio numérique conformément à une seconde modulation qui fournit une résistibilité supérieure à l'erreur de transmission que la première modulation, et le signal d'image numérique, le signal audio numérique de réception fixé, le signal audio numérique de réception d'objet mobile et le signal d'image numérique sont multiplexés, ladite méthode comprenant :

une étape de démodulation destinée à recevoir et démoduler le signal d'image numérique, le signal audio numérique de réception fixé et le signal audio numérique de réception d'objet mobile ;

une étape de détection de statut de réception destinée à détecter un niveau de signal du signal vidéo numérique reçu et à sortir un signal de commande lorsqu'une valeur détectée est inférieure à une valeur préétablie ; et

une étape de commande de commutation audio destinée à recevoir le signal audio numérique de réception fixé provenant d'une sortie audio de réception fixée comme entrée et à sortir le signal audio numérique de réception fixé, et lorsque le niveau de signal du signal vidéo numérique reçu est inférieur à la valeur préétablie, effectuer la commutation vers une sortie audio de réception d'objet mobile pour recevoir le signal audio numérique de réception d'objet mobile comme entrée et

sortir le signal audio numérique de réception d'objet mobile.

**7.** Méthode de réception de signal vidéo numérique selon la revendication 6, dans laquelle une information de comptabilité est ajoutée au signal audio numérique de réception d'objet mobile.

**8.** Méthode de réception de signal vidéo numérique selon la revendication 7, dans laquelle
ladite étape de commande de commutation audio consiste à extraire et à mémoriser davantage l'information de comptabilité, ladite méthode comprenant, en outre :

une étape d'entrée/sortie d'information de comptabilité pour effectuer une comptabilité d'usage du signal audio numérique de réception d'objet mobile conformément à l'information de comptabilité mémorisée.

**9.** Appareil de réception de signal vidéo numérique qui reçoit un signal vidéo numérique dans lequel un signal d'image numérique et un signal audio numérique correspondant au signal d'image numérique sont multiplexés comme entrée, et reproduit le signal d'image numérique et le signal audio numérique provenant du signal vidéo numérique reçu, dans lequel
le signal vidéo numérique comprend un signal audio numérique de réception fixé obtenu par modulation du signal audio numérique conformément à une première modulation et un signal audio numérique de réception d'objet mobile obtenu par modulation du signal audio numérique conformément à une seconde modulation qui fournit une résistibilité supérieure à l'erreur de transmission que la première modulation, et le signal d'image numérique, le signal audio numérique de réception fixé, le signal audio numérique de réception d'objet mobile et le signal d'image numérique sont multiplexés, ledit appareil comprenant :

un synthonisateur (31) qui reçoit le signal vidéo numérique ;

un moyen (32) de démodulation de multiplexage à division de fréquence orthogonale qui démodule le signal d'image numérique, le signal audio numérique de réception fixé et le signal audio numérique de réception d'objet mobile ;

un moyen de division de modulation (34) qui soumet les signaux démodulés provenant du moyen (32) de démodulation de multiplexage à division de fréquence orthogonale à une division de modulation, mettant hors de correspondance de manières adaptées à des méthodes de modulation respectives, puis à une composition de modulation ;

un moyen (35) de séparation de trame de transport qui reproduit une trame de transport provenant des signaux composites par modulation provenant du moyen à division de modulation (34), corrige des erreurs pour chacun des paquets comprenant la trame de transport, sépare les paquets en le signal d'image numérique, les signal audio numérique de réception fixé et le signal audio numérique de réception d'objet mobile et sort le signal d'image numérique, le signal audio numérique de réception audio fixé et le signal audio numérique de réception d'objet mobile, provenant d'une sortie vidéo, une sortie audio de réception fixée et une sortie audio de réception d'objet mobile, respectivement ;

un moyen (36) de détection de statut de réception qui détecte un niveau de signal du signal vidéo numérique reçu et sort un signal de commande lorsque la valeur détectée est inférieure à une valeur préétablie ;

un moyen (37) de commande de commutation audio qui reçoit le signal audio numérique de réception fixé provenant de la sortie audio de réception fixée comme entrée et sort le signal audio numérique de réception fixé et lors de la réception du signal de commande provenant du moyen de détection de statut de réception, effectue une commutation vers la sortie audio de réception d'objet mobile pour recevoir le signal audio numérique de réception d'objet mobile comme entrée et sort le signal audio numérique de réception d'objet mobile ;

un décodeur (38) qui reçoit et décode le signal d'image numérique provenant du moyen (35) de séparation de trame de transport et, soit le signal audio numérique de réception fixé, soit le signal audio numérique de réception d'objet mobile sorti à partir du moyen de commande de commutation audio ;

un affichage (39) qui affiche une image décodée ; et

un système de haut-parleur (40) qui rejoue l'audio décodée.

10. Appareil de réception de signal vidéo numérique selon la revendication 9, dans lequel une information de comptabilité est ajoutée au signal audio numérique de réception d'objet mobile.

11. Appareil de réception de signal vidéo numérique selon la revendication 10, dans lequel
ladite étape de commande de commutation audio reçoit le signal audio numérique de réception fixé provenant d'une sortie audio de réception fixée comme entrée et sort l'audio de réception fixé, et lorsque le niveau de signal du signal vidéo numérique reçu est inférieur à la valeur préétablie, effectue une commutation vers la sortie audio numérique de réception d'objet mobile pour recevoir le signal audio numérique de réception d'objet mobile comme entrée, extrait et mémorise l'information de comptabilité, et sort le signal audio numérique de réception d'objet mobile, ledit appareil comprenant, en outre :

un moyen d'entrée/sortie d'information de comptabilité qui effectue une comptabilité d'usage du signal audio numérique de réception d'objet mobile conforme à l'information de comptabilité mémorisée.

Fig.1

EP 0 954 178 B1

EP 0 954 178 B1

## Fig.2

header
section    decryption key                    data section

①         ②         ③

data header    — video and audio data

layer data

# Fig.3 (a)

# Fig.3 (b)

video information
(package data)

hierarchical data

heder
section

decryption
key

class definition
section

① ② ③

data section

① ② ③

① data
heander ②
③

class definition
section
(rank ID/
rank name)

data section

Fig.4 (a)

M30 map information

①      M31 road map

②      M32 residence map

③

M33
video of intersection

Fig.4 (b)

①    M31 road map

②    M32 residence map

③

M33
video of intersection

Fig.5

information ID number

| layer symbols | data |
|:---:|:---:|
| A | |
| B | |
| C | |
| ⋮ | |
| X | |
| Y | |
| Z | |

Fig.6

EP 0 954 178 B1

## Fig.7 (a)

program accounting data base

| user ID | obtained data | receiving result | accounting rate | charge |
|---|---|---|---|---|
|  |  |  |  |  |

## Fig.7 (b)

accounting rate table

| program information No. | file information | information charge | accounting rate (error status : accounting ratio) |
|---|---|---|---|
|  |  |  |  |

## Fig.7 (c)

receiving status management table

| user ID | requested information No. (program) | receiving status (file : status) | transmission status |
|---|---|---|---|
|  |  |  |  |

Fig.8

EP 0 954 178 B1

**Fig.9**

EP 0 954 178 B1

Fig.10

EP 0 954 178 B1

Fig.11

| receiving environment | | modulation method | data redundancy |
|---|---|---|---|
| fixed terminal | | 64QAM | small |
| mobile terminal | receiving error rate (low) | 64QAM | small |
| | receiving error rate (medium) (including the case where receiving error rate is unclear) | QPSK | medium |
| | receiving error rate (high) | QPSK | large |

EP 0 954 178 B1

Fig.12

video information → [data division unit] 201 → [error correction unit] 202 → [transmission data generation unit] 203 → to central station side transmission means 8

data redundancy indication signal → [redundancy control unit] 204

[data storage unit] 205

Fig.13 (a)

| A1 | A2 | · · · · · · · · | A (n) |
|----|----|----|----|

Fig.13 (b)

| partition symbol | file ID | division number | data |
|----|----|----|----|

Fig.13 (c)

| partition symbol | file ID | division number | data | error correcting code |
|----|----|----|----|----|

## Fig.14

EP 0 954 178 B1

Fig.15

| receiving environment | | | modulation | data redundancy |
|---|---|---|---|---|
| fixed terminal | | | 64QAM | small |
| mobile terminal | "no tunnel" | car speed "high" | 64QAM | small |
| | | car speed "low" | QPSK | medium |
| | "tunnel" | | reject distribution of video information | |

Fig.16

Fig.17

| receiving environment | | modulation | data redundancy |
|---|---|---|---|
| fixed terminal | | 64QAM | small |
| mobile terminal | predicted receiving error rate "low" | 64QAM | small |
| | predicted receiving error rate "medium" | QPSK | medium |
| | predicted receiving error rate "high" | QPSK | large |

Fig.18

| TSP | sync byte | MPEG audio data | parity |
|-----|-----------|-----------------|--------|

| transmission TS | image signal A | audio signal A1 | audio signal A2 | image signal B | audio signal B1 | audio signal B2 | . . . . . . . . . . |
|-----|-----|-----|-----|-----|-----|-----|-----|

Fig.19

Fig.20

OFDM modulator C6

from transmission line encoding unit C5

- DQPSK
- QPSK
- 16QAM
- 64QAM

- DQPSK
- QPSK
- 16QAM
- 64QAM

· · · · · · · ·

- DQPSK
- QPSK
- 16QAM
- 64QAM

carrier modulation unit D21

D22

layer composition unit

D23

time/frequency interleaving unit

D24

OFDM frame creating unit

to transmitter C7

EP 0 954 178 B1

Fig.21

Fig.22

## Fig.23

| receiving TS | image signal A | audio signal A1 | audio signal A2 | image signal B | audio signal B1 | audio signal B2 | . . . . . . . . . . |
|---|---|---|---|---|---|---|---|

| TS1 | image signal A | audio signal A1 | | image signal B | audio signal B1 | | . . . . . . . . . . |
|---|---|---|---|---|---|---|---|

| TS2 | image signal A | audio signal A1 | | image signal B | | audio signal B2 | . . . . . . . . . . |
|---|---|---|---|---|---|---|---|

# Fig.24

EP 0 954 178 B1

Prior Art

## Fig.25 (a)

sink chip

sink chip

102
video signal period

103
video signal
retrace line period

101 video signal

104
synchronization
pattern signal

105 auxiliary data (packet signal)

104
synchronization
pattern signal

105 auxiliary data
(packet signal)

## Fig.25 (b)

header

| 111 | 112 | 113 | 114 | 115 data block | 116 |

range of checksum

105 auxiliary data (packet signal)

EP 0 954 178 B1

EP 0 954 178 B1

Fig.26   Prior  Art

EP 0 954 178 B1

## Fig.27 Prior Art